# EUROPEAN PATENT SPECIFICATION

(11) **EP 3 814 750 B1**
(45) Date of publication and mention of the grant of the patent: **05.03.2025**
(21) Application number: 20824059.8
(22) Date of filing: 03.09.2020
(51) Int. Cl.: G01N 21/77, G01N 21/84

(54) **AN OPTICS MODULE FOR AN ASSEMBLY TO GENERATE A TEST RESULT FROM AN ASSAY**
EIN OPTISCHES MODUL FÜR EINE BAUGRUPPE ZUM ERZEUGEN EINES TESTERGEBNISSES AUS EINEM TEST
MODULE OPTIQUE POUR UN ASSEMBLAGE PERMETTANT DE GÉNÉRER UN RÉSULTAT DE TEST À PARTIR D'UN ESSAI

(30) Priority: 03.09.2019 US 201962895165 P; 07.11.2019 US 201962932124 P
(43) Date of publication of application: 05.05.2021
(60) Divisional application: 25154939.0
(73) Proprietor: Charm Sciences Inc., Lawrence, MA 01843 (US)
(72) Inventor: GRAHAM, Paul, Dracut, Massachusetts 01826 (US); MARKOVSKY, Robert, Brentwood, New Hampshire 03833 (US)
(74) Representative: J A Kemp LLP
(86) International application number: PCT/US2020/049116
(87) International publication number: WO 2021/046164

(56) References cited:
- WO-A1-2019/121815
- WO-A1-2020/118451
- US-A1- 2012 071 342
- US-A1- 2012 142 020
- US-A1- 2013 157 381
- US-A1- 2015 276 613
- US-A1- 2018 238 809

## Description

### Field of the Technology

The present disclosure relates generally to analytical testing, and more particularly to improved detection of an analyte in an offset testing device, system, and assembly. The present invention relates to an optics module for an assembly to generate a test result from an assay and to an apparatus comprising such an optics module.

### Background

Reagent strips and films are often a helpful analytical tool in the fields of clinical chemistry, analytical medicine and food sanitation diagnostics. For example, it is advantageous to determine or to test, through quantitative or qualitative methods, various matrices, including body fluids such as serum and urine, and food, such as meat products, fruit, vegetables, milk, honey and the like. Such matrices can be tested for a variety of analytes including a variety of chemicals, biochemicals and biological molecules such as bacteria, antibiotics, for example, sulfa drugs, tetracyclines, beta-lactam drugs; toxins, such as aflatoxin, zearalonone, ochratoxin, T-2, and vomitoxin, pesticides such as organophosphates and carbamates, and active metabolites, either in materials or on the surface of materials or a combination thereof.

Generally, lateral flow assays are membrane-based test devices in which a sample that is suspected of containing the analyte of interest is placed at or near one end of the membrane strip. The sample is carried to the opposite end of the membrane strip by a mobile phase that traverses the membrane strip, for example by capillary action. While traversing the membrane strip, the analyte in the test sample, if any, encounters one or more reagents. The reagents can include binders for the analyte. Binders can be mobile and, therefore, flow with the sample, or be immobilized on the test strip as a capture agent. Depending on the test configuration, either the analyte binder, the analyte itself, or some other reagent in the test system will be captured by the immobilized capture agent and, thereby, produce a detectable signal. The signal can be generated by a label provided within the assay. The detectable signal can be measured, such as by an optical reader.

The presence and, in some cases, the concentration, of an analyte on a reagent strip may be determined by measuring the optical reflectance from an area of development on the strip. For example, the area of development on the strip may be an area of color development. Percent reflectance can be used to determine the result.

Testing commonly occurs in a controlled environment, such as a laboratory, but testing in non-laboratory settings is also common. In some applications speed and ease of use is particularly important. For example, in food processing it would be advantageous for tests to be run in non-laboratory settings because processors must wait for results. Further, it would also be advantageous for tests to be run on trucks during transport of the items. For that reason, it would be advantageous to accelerate the speed of testing, reduce the cost of equipment and tests, improve the ruggedness of the apparatus, and enhance the ease of use and simplicity of operation. In addition, it is advantageous to have confidence that test results are valid. Therefore, systems, methods and devices herein also assist in preventing fraudulent use of pre-run, known negative assays in place of true samples or use of assays pre-marked to provide a negative result that does not reflect the true nature of the sample. It is also desirable to increase the ruggedness of the assays, systems and test procedures.

US 2015/0276613 A1 discloses the detecting of a definitive presence or absence of an analyte from a borderline test. In one embodiment, a method of generating a definitive test result includes continuously incubating the assay concurrently with continuously reading a diagnostic test on the assay. In particular examples, reading the diagnostic test on the assay includes performing a one minute diagnostic reading.

US 2013/0157381 A1 discloses an apparatus for performing an assay to detect the presence of an analyte in a test sample. A housing defines a slot for receiving a sample collector, and a capsule contains a buffer liquid, the capsule being sealed by an openable lid, and being connected to the housing such that insertion of a sample collector into the slot causes the lid to open releasing the buffer liquid into the slot. The housing further defines an incubation chamber containing or configured to receive a reagent, and an aperture permitting liquid communication between said slot and the incubation chamber. The apparatus comprises one or more test elements, a substantially liquid tight sealing member separating the incubation chamber and the test element(s), and an activation mechanism operable to open said liquid tight sealing member thereby bringing at least a portion of the or each test element into liquid communication with said incubation chamber.

Therefore, Applicants desire systems and methods for analyte detection without the drawbacks presented by traditional systems and methods.

### Summary

This disclosure provides improved analyte detection that is convenient, efficient, and safe for the user, particularly when used to detect a presence or absence of at least one analyte.

The invention is defined in the independent claim 1.

Further aspects and preferred embodiments are defined in the dependent claims. Any aspects, embodiments and examples of the present disclosure which do not fall under the scope of the appended claims do not form part of the invention and are merely provided for illustrative purposes.

In certain examples, the optics module includes an overhang lip to align a proximate portion of the assay protruding about the optics module in an operating position. The optics module may include a substantially planar proximate portion and an opposing non-planar distal portion. The planar proximate portion and the non-planar distal portion may define a non-planar flow path about the assay in a testing position. The planar proximate portion and the non-planar distal portion may define an elevated flow path about the assay in a testing position. The non-planar distal portion may be about ten degrees to about thirty degrees offset from the planar proximate portion. The non-planar distal portion may be about twenty degrees offset from the planar proximate portion.

In certain examples, the apparatus may include a pivot point aligned between the planar proximate portion and the non-planar distal portion. The apparatus may include an aperture carrier heat block. The optics module may include a proximity switch. The proximity switch may break a path of an optical interrupter to trigger at least one condition chosen from the group consisting of an incubation, a detection of a transmission of light about the assay, and an imaging on the assay. The apparatus may perform at least two image detections of the assay. The optical detector may monitor at least one pre-test parameter after receiving the assay.

In one embodiment, an assembly to generate a test result from an assay includes an offset frame adapted to receive the assay, wherein the frame includes an upper tier platform angled offset about a lower tier platform; and an optics aperture aligned about the frame.

In one example, the offset frame aligns a proximate portion of the assay external of the assembly in an operating position. The upper tier platform may be aligned offset about the lower tier platform about a pivot point. The offset frame may receive a portion of the assay in a first substantially planar position. The offset frame may align a portion of the assay in a second
substantially non-planar position. The optics module may image the assay adjacent a bend about the assay in an operating position.

**In** one embodiment, in an apparatus to generate a test result from an assay, a modular interface includes a housing adapted to align the assay in an offset position; a motherboard support aligned in the housing; an optical strip detector; a light level detector; an imaging device; a light source; and an integrated incubator.

**In** one embodiment, an apparatus to generate a test result from an assay when contacted with a sample includes a non-planar optics module aligning the assay in an offset position; an incubator incubating the assay; and an optical detector detecting a transmission of light on the assay, and wherein incubation of the assay and detection of the transmission of light on the assay generates the test result.

**In** particular examples, the optics module includes a substantially planar proximate portion and an opposing non-planar distal portion. The planar proximate portion and the non-planar distal portion may define a non-planar flow path. The planar proximate portion and the non-planar distal portion may define an elevated non-planar flow path. The apparatus may include a pivot point aligned between the planar proximate portion and the non-planar distal portion. The apparatus may include a non-planar cavity. The cavity may include an elongated channel. The aperture carrier may be positioned within the cavity. The optics module may include a lower support. The optics module may include an interface shell. The optics module may include a drip tray. The optics module may include an insulated base. The optics module may include an upper cover. The optics module may include a proximity switch. The proximity switch may break a path of an optical interrupter to trigger incubation. The proximity switch may break a path of an optical interrupter to trigger detection of a transmission of light passed through the assay. The proximity switch may break a path of an optical interrupter to trigger imaging on the assay.

**In** certain examples, the apparatus performs a continuous image detection of the assay. Further, the incubation environment may include a heated environment. The incubation environment may include a cooled environment. The incubation environment may include a maintained consistent temperature environment. The optical detector may monitor at least one pre-test parameter after acquiring at least one image detection on the assay. The image detection may include an optical reflectance value. The assay may include a test strip having at least one test line and at least one control line, and whereby a theoretical reflectance value is a comparison between a reflectance value at the test line and a reflectance value at the control line. The test line and the control line may be positioned in a non-planar distal portion in an operating position. The apparatus may include a user interface having a display board.

In another embodiment in an assembly to generate a test result from an assay, an optics module includes an offset frame mountable about a base and adapted to receive the assay, wherein the frame includes an upper tier platform angled offset about a lower tier platform; and an optics aperture aligned within the frame.

In certain examples, the upper tier platform is aligned offset about the lower tier platform about a pivot point. The offset frame may receive the assay in a first substantially planar position. The offset frame may align the assay in a second substantially non-planar position. The device may include a housing. The assembly may perform continuous image detection of the assay to generate the test result. The device may include an incubator to incubate the assay. The device may include an optical detector to detect a transmission of light on the assay. The incubation of the assay and detection of the transmission of light on the assay generates the test result. The device may include an insulated base. The device may include an upper cover. The device may include a proximity switch. The proximity switch may break a path of an optical interrupter to trigger incubation. The proximity switch may break a path of an optical interrupter to trigger detect a transmission of light passed through the assay. The proximity switch device may break a path of an optical interrupter to trigger imaging on the assay. The proximity switch device may initiate a test, wherein the incubator is already maintaining a required temperature or where the incubator is inactive and the device is in a read-only mode.

In another embodiment, a modular interface to generate a test result from an assay includes a motherboard support; and at least one non-planar optics module positionable about the motherboard support.

In certain examples, the device includes at least one testing unit.

In one embodiment, a non-planar, including but not limited to in-line, testing and product delivery assembly includes a supply of product having at least one outlet; a sample feed in fluid communication with the supply of product; a reader; and a delivery line in fluid communication with the supply outlet and having a delivery output valve. In particular embodiments, the reader receives a sample from the sample feed and generates a test result from an assay for detecting a presence or absence of an analyte. The reader may have an optical detector to image at least a first of light on the assay and an incubator to incubate the assay. In particular embodiments, a detection of the analyte triggers a closure of the delivery output valve, whereas a detection of an absence of the analyte triggers an opening of the delivery output valve to release supply through the delivery line.

In one example, the reader includes a hood to removably receive a single-use rapid assay, and wherein the hood comprises a puncture tip protruding to puncture the assay. Further, the hood may include a sample supply line in fluid communication with the sample feed to dispense sample into the assay. For instance, the sample feed may be aligned adjacent the puncture tip to dispense sample into the assay at the puncture to increase rapid testing.

In certain examples, the reader includes an inclined cavity having an elongated channel to receive and maintain the assay in an inclined testing position. The inclined cavity may include a proximate portion and an opposing distal portion, wherein the distal portion positioned above the proximate portion at about a forty-five degree, or similar, incline. Further examples include the distal portion positioned above the proximate portion at less than a forty-five degree incline.

In particular examples, the reader generates a definitive test result within about fifteen seconds to about one minute, for instance the reader generates a definitive test result within about thirty seconds. In other particular examples, the reader generates a definitive test result within about ten seconds to about fifteen minutes. In addition, the assembly may include an auto-sampler that is generally in fluid communication with the sample feed. The assembly may include a drip sampler in fluid communication with any of the system elements and embodiments shown and described herein. The sample feed may be a closed loop recirculation system about the supply of product. The assembly may include an auto-sampler in fluid communication with the closed loop system at a sample release valve, wherein the recirculation loop being in fluid communication with the outlet and having a re-entry fluid communication with the supply of product. At least a portion of the recirculation loop may be a single use disposable conduit and/or a cleanable conduit.

In certain examples, the reader's optical detector detects a first transmission of light on the assay and detects at least a subsequent transmission of light on the assay, and wherein incubation of the assay and detection of the transmissions of light on the assay generates the test result. Further, the reader may generate at least one borderline test result.

In another embodiment, a non-planar testing and product delivery system includes a supply of product having at least one outlet, wherein the outlet includes at least one valve closure and a delivery line downstream of the valve closure; a recirculation closed loop in fluid communication with the outlet and the supply; a reader adapted to generate a rapid test result from a single use assay for detection of a presence or an absence of an analyte, and a sampler in fluid communication with the recirculation closed loop to provide a sample to the reader. In particular examples, the reader has an inclined cavity to receive and maintain the assay in an inclined testing position and a puncture tip to puncture the assay. In particular embodiments, a detection of the analyte triggers a closure of the valve closure upstream of the delivery line, and a detection of an absence of the analyte enables release of the supply to the delivery line.

In certain rapid test result examples, the single use assay includes about a three millimeter overlap of a binder application area over a nitrocellulose membrane. Further, the single use assay may include about a thirty-one millimeter length absorbent pad.

In another embodiment, in a non-planar testing and product delivery having a supply tank, a sample feed, and a downstream delivery, a reader controls access of a product between the supply tank and the downstream delivery and includes an inclined cavity to receive a single use assay; a sample portal in fluid communication with the sample feed and into alignment with the assay aligned in the cavity; a puncture tip extending in the cavity to puncture the assay; an optical detector adapted to monitor the assay; and an incubator to incubate the assay.

In a further embodiment, a non-planar testing and product delivery assembly includes a supply of product having at least one outlet; a recirculation loop in fluid communication with the outlet and having a re-entry fluid communication with the supply of product; an autosampler to receive a sample from the supply of product; a reader receiving the sample from the autosampler and adapted to generate a test result from an assay for detecting a presence or absence of an analyte; and a delivery line in fluid communication with the supply of product and having at least one valve closure, and wherein a positive test result generated by the reader enables the valve closure, and a negative test result generated by the reader releases the product to a downstream delivery.

In particular examples, the supply of product includes a milk tank. The analyte may be toxins, antibiotics, chemicals, biochemical, pesticides, active metabolites, and a combination thereof. For instance, the analyte may be mycotoxin, aflatoxin, zearalonone, ochratoxin, T-2, vomitoxin, and a combination thereof. The reader may generate a definitive test result within about fifteen seconds to about one minute, for instance within about thirty seconds. In particular examples, the reader generates a definitive mycotoxin test result within about thirty seconds.

In some examples, the auto-sampler is aligned in fluid communication with the recirculation loop. The auto-sampler may be a drip sampler. The delivery supply line may be aligned in fluid communication with the recirculation loop. The recirculation loop may include a closure valve. The recirculation loop being a disposable conduit, a cleanable conduit, or the like. The recirculation loop may include a pump. The assembly may include a plurality of supplemental conduits.

In certain examples, the reader includes an incubator. The reader may perform a diagnostic test on the assay concurrently as the incubator incubates the assay. The reader may generate at least one borderline test result. The reader may perform one or more subsequent continuous readings to generate the test result after performing the first reading of the diagnostic test. The reader may perform one or more subsequent continuous readings and extends incubating of the assay to generate a definitive test result after performing the first reading of the diagnostic test.

In particular examples, receiving the sample includes autosampling the product. The method may include autosampling from the recirculation loop. The method may include blocking the downstream delivery of product includes enabling a delivery valve closure. Releasing the product may include enabling a recirculation valve closure. Generating the test result may include incubating the assay. Generating the test result may include reading a diagnostic test on the assay concurrently as an incubator incubates the assay. Generating the test result may include generating at least one borderline test result. Generating the test result may include performing one or more subsequent continuous reading of the diagnostic test. Generating the test result may include extending incubating of the assay after performing the first reading of the diagnostic test. Generating the test result may include extending incubating of the assay to generate a definitive test result after performing the first reading of the diagnostic test.

In certain examples, reading the diagnostic test includes performing about a thirty second diagnostic reading. Further, generating the test result may include reading a predetermined difference between a reflectance value on a control line and a reflectance value a test line. Generating a definitive test result may include reading a predetermined difference between a reflectance value of a control line and a reflectance value of test line, and a predetermined reflectance value on the control line.

In particular examples, the method may include monitoring a pre-test analysis on the assay and/or decoding a reference coding on the assay. For instance, to activate a corresponding channel in a multichannel reader and activate an incubation of the assay. Further, the method may include monitoring a pre-flow development along the assay. The method may include signaling an optical detector to perform continuing image detection of the assay to generate a test result, wherein the test result is a borderline test result. In addition, the method may include developing a subsequent image detection of the borderline test result to generate a definitive presence or absence test result.

In yet another embodiment, a method of analyzing a borderline test of an assay includes several image detections of the assay to provide a definitive presence or absence test result. In one example, the method includes incubating the assay in an incubation environment, aligning an optical detector in an optical path with the assay, signaling the optical detector to perform a first image detection, and signaling the optical detector to perform a second image detection. Typically, signaling the optical detector to perform a first image detection of the assay generates a borderline test result. Further, the method typically includes signaling the optical detector to perform at least a second subsequent image detection of the assay to generate a definitive presence or absence test result. Other examples include a variety of subsequent image detections as shown and described herein.

In yet other embodiments, a method of detecting an analyte from an assay includes aligning an optical detector in an optical path with the assay; signaling the optical detector to perform continuing image detection of the assay to generate a definitive presence or absence test result; and developing further image detection of the diagnostic test for a borderline test result. In some examples, the method may include incubating the assay in an incubation environment concurrently as the optical detector performs continuing image detection of the assay. In some exemplary embodiments, the method includes signaling the optical detector to perform a one minute image detection. Typically, detecting a definitive presence test result includes deactivating the system. Similarly, detecting a definitive negative test result includes deactivating the system.

**In** another embodiment a method of generating a definitive test result from an assay for detecting the presence or absence of an analyte includes incubating the assay in an incubation environment; reading a diagnostic test on the assay concurrently as an incubator incubates the assay; and performing continuous reading of the diagnostic test and incubating of the assay of a borderline test result to generate the definitive test result. **In** certain examples, reading the diagnostic test includes performing a one minute diagnostic reading. Typically, detecting the definitive positive test includes deactivating the system. Similarly, detecting a definitive negative test includes deactivating the system. Generating a definitive test result may include reading a predetermined difference between a reflectance value on a control line and a reflectance value a test line. Similarly, generating a definitive test result may include reading a predetermined difference between a reflectance value of a control line and a reflectance value of test line, and a predetermined reflectance value on the control line.

In other examples, the method includes monitoring a pre-test analysis on the assay. Further, the method may include decoding a reference coding on the assay. In addition, the method may include activating a corresponding channel in a multichannel reader and/or activating an incubation of the assay. The method may also include monitoring a pre-flow development along the assay.

In another aspect of the disclosure, an assay measurement apparatus to generate a diagnostic test result from an assay includes an optical detector and a microprocessor. The optical detector may be aligned in an optical path with the assay. The optical detector may be adapted to acquire an image detection on the assay due to an aberration on the assay. The microprocessor may be in communication with the optical detector. The microprocessor may be adapted to signal the optical detector to perform continuous image detection of the assay to generate the diagnostic test result.

The optical detector may comprise a decoding sensor that is adapted to align with the assay and decode a reference coding on the assay. In particular examples, the decoding sensor and the optical reader are a single device. However, those skilled in the art having the benefit of this disclosure will recognize other examples include the decoding sensor and the optical reader may be separate, or separable, devices. The reference coding may activate a corresponding diagnostic test in the optical detector. The apparatus may include a multichannel reader and the reference coding may activate a corresponding channel in the multichannel reader. The apparatus may include an incubator and the reference coding may activate a corresponding incubation temperature.

The decoding sensor may be a color sensor. The color sensor may be a photodiode with sensitivity to wavelengths chosen from red, blue, green and a combination thereof. The decoding sensor may be an RFID reader. The decoding sensor may be a bar code reader.

The decoding may be accomplished with character recognition, for instance OCR, or similar, algorithms thresholding assays to generate binary labeling for analysis of any of the systems and examples shown and described herein. Those skilled in the art having the benefit of this disclosure will recognize additional OCR features and methodology.

In one example, the apparatus includes a light source. The light source may be an array of discrete light sources. For instance, the discrete light sources may comprise one light emitting diode and/or multiple light emitting diodes. The light emitting diodes may be colored diodes chosen from red, green, blue and a combination thereof. The light source may comprise an illumination profile suitable for reflecting on a test strip assay. The light source may be aligned with a light aperture, exposing light from the light source on the assay. A first mirror may be below the light aperture. A focusing lens may receive light from the first mirror. A second mirror may be positioned to direct light from the focusing lens to the optical detector. A lighting processor may be adapted to trigger the light source to emit light for a desired pattern. The lighting processor may include data storage for the desired light-emission pattern.

In another example, the optical detector will not generate a test result until the decoding sensor decodes the reference coding. The optical detector may be a light-to-voltage sensor. The optical detector may comprise a photodiode in the optical path with the assay coupled to an integrated circuit. The integrated circuit may be a monolithic integrated circuit. The optical detector may include an amplifier. The amplifier may be a translucence amplifier.

The apparatus may include a memory adapted to store information corresponding to an imaging parameter for the image detection. The decoding sensor may be chosen from a color sensor, a RFID reader, a bar code reader and a combination thereof. The optical detector may include an optical window that is adapted to block debris from contact with the optical detector. The optical detector may include an optics housing to enclose the optical detector and that is adapted to block debris from contact with the optical detector. The optical detector may monitor a diagnostic test progress. The optical detector may monitor a pre-test parameter prior to generating a diagnostic test result. The optical detector may monitor at least one pre-test parameter after the optical detector has acquired at least one image detection on the assay.

In another embodiment, in an assay measurement apparatus having an imaging detector and a microprocessor, a memory that is in communication with the microprocessor and is adapted to store information corresponding to an imaging parameter. The memory may include an instruction for monitoring a pre-test analysis on the assay. The memory may include an instruction for generating a diagnostic test result on the assay. The pre-test parameter may include a theoretical reflectance value.

In one example, the assay may include at least one test line and at least one control line, and whereby the theoretical reflectance value is a comparison between a reflectance value at the test line and a reflectance value at the control line. A reflectance value on the assay that is inconsistent with the theoretical reflectance value may indicate an inadequate flow on the assay. The inadequate flow may trigger a detectable signal to generate a no-result response. **In** particular examples, data of the no-result response is maintained and logged as in any of the examples and embodiments shown and described herein. The reflectance value on the assay that is inconsistent with the theoretical reflectance value may indicate a prior analyte development on the assay. The reflectance values may suggest prior analyte development may trigger a detectable signal to deactivate the assay measurement apparatus. The reflectance value on the assay that is inconsistent with the theoretical reflectance value may indicate a contaminated optical path.

The contaminated optical path may trigger a detectable signal to generate a no-result response. The instruction for generating a test result may correspond to an image detection on the assay. The image detection may be an optical reflectance value or a transmission value. The assay may include at least one test line and at least one control line, and whereby the optical reflectance value is a comparison between a reflectance value at the test line and a reflectance value at the control line. The apparatus may be adapted to perform a continuous image detection of the assay. The assay may be a lateral flow assay. The assay may also be a lateral, capillary-flow, elongated test strip.

The test result may be determined within about thirty seconds of optical detector activation. The test result may be determined within about sixty seconds of optical detector activation. The apparatus may include a power source. The power source may be a vehicle battery. Further, the optical detector may be in communication with an onboard vehicle system.

In other embodiments, an assay measurement apparatus to generate a test result from an assay may include an imaging detector and a microprocessor with an associated memory in communication with the microprocessor. The imaging detector may be adapted to decode a reference coding on the assay and to acquire an image detection on the assay due to an aberration on the assay. The microprocessor may be adapted to signal the imaging detector to generate the test result. The memory may be in communication with the microprocessor and may be adapted to store information corresponding to a plurality of imaging parameters. The memory may include a parameter for monitoring a pre-test analysis on the assay. The memory may include a parameter for generating the diagnostic test result from the assay.

A reference coding may activate a corresponding diagnostic test in the optical detector. A multichannel reader and the reference coding may activate a corresponding channel in the multichannel reader. The apparatus may include an incubator and the reference coding may activate a corresponding incubation temperature.

The imaging detector may be adapted to decode the test reference coding and comprise a decoding sensor. The decoding sensor may be a color sensor. In particular examples, the decoding sensor may be an OCR sensor, or the like. The color sensor may be a photodiode with sensitivity to wavelengths chosen from red, blue, green and a combination thereof. The decoding sensor may be an RFID reader. The decoding sensor may also be a bar code reader.

Typically, the apparatus includes a light source. The light source may be an array of discrete light sources. The discrete light sources may comprise light emitting diodes. The light emitting diodes may be colored diodes chosen from red, green, blue and a combination thereof. The light source may comprise an illumination profile suitable for reflecting on a test strip assay. The light source may be aligned with a light aperture exposing the light source on the assay. The light source may include a first mirror below the light aperture. A focusing lens may receive light from the first mirror. A second mirror may be positioned to direct light from the focusing lens to the optical detector. A lighting processor may be adapted to trigger the light source to emit light for a desired pattern. The lighting processor may include data storage for the desired light-emission pattern. The optical detector may not generate a test result, or even initiate reading of the test, until the decoding sensor decodes the reference coding.

The optical detector may be a light-to-voltage sensor. The optical detector may be a camera. The optical detector may comprise a photodiode coupled to an integrated circuit in the optical path with the assay. The integrated circuit may be a monolithic integrated circuit. The optical detector may include an amplifier. The amplifier may be a translucence amplifier. The optical detector may include an optical window that is adapted to block debris from contact with the optical detector. The optical detector may also include an optics housing to enclose the optical detector and that is adapted to block debris from contact with the optical detector.

In some examples, the optical detector may monitor a diagnostic test progress. The optical detector may monitor a pre-test parameter prior to generating a diagnostic test result. Further, the optical detector may monitor at least one pre-test parameter after the optical detector has acquired at least one image detection on the assay. The pre-test parameter may include a theoretical reflectance value. The assay may include at least one test line and at least one control line, and whereby the theoretical reflectance value is a comparison between a reflectance value at the test line and a reflectance value at the control line. Theoretical reflectance values may also be a pre-set preset parameter value for the control line or the test line. For instance, the control line may be the theoretical reflectance value. A reflectance value on the assay that is inconsistent with the theoretical reflectance value may indicate an inadequate flow on the assay. The inadequate flow may trigger a detectable signal to generate a no-result response. Further, a reflectance value on the assay that is inconsistent with the theoretical reflectance value may indicate a prior analyte development on the assay. The prior analyte development may trigger a detectable signal to generate a no-result response. Yet further, a reflectance value on the assay that is inconsistent with the theoretical reflectance value may indicate a contaminated optical path. The contaminated optical path may trigger a detectable signal to get a no-result response reading, and/or deactivate the assay measurement apparatus.

An instruction for generating a test result may correspond to an image detection on the assay. The image detection may be an optical reflectance value. The assay may include at least one test line and at least one control line, and whereby the optical reflectance value is a comparison between a reflectance value at the test line and a reflectance value at the control line. The apparatus may be adapted to perform a continuous image detection of the assay. The assay may be a lateral flow assay. For instance, the assay may be a lateral, capillary-flow, elongated test strip. Further, the apparatus may include a means for a power source.

In yet another embodiment, a lateral flow assay for the detection of an analyte and having a test zone and a control zone, a surface having a reflectance profile includes at least one flow reference and at least one test result reference. The at least one flow reference area may be adapted to enable monitoring of a pre-flow development along the assay. The at least one test result reference area may be adapted to enable monitoring a pre-test detection of the analyte on the assay.

The reflectance profile may include a theoretical light reflectance measurement. The theoretical light reflectance measurement may comprise a no-flow development theoretical value. The no-flow development value may be a reflectance value of about 85. A reflectance value of greater than about 85 may generate a signal to deactivate the detection of the analyte. The flow reference area may include at least one downstream flow reference line. The downstream flow reference line may include a theoretical reflectance value after the flow reference line receives reagent flow thereon. The flow reference area may include both an intermediary flow reference line and a downstream flow reference line. The intermediary flow reference line may include a theoretical reflectance value after the flow reference line receives reagent flow thereon. The theoretical light reflectance measurement may comprise a no-analyte pre-test development theoretical value. The flow reference may also be the control zone.

The test result reference area may include at least one test line having a theoretical reflectance value. The test result reference area may include at least one control line having a theoretical reflectance value. The test result reference area may include at least one test line having a theoretical reflectance value and at least one control line having a theoretical reflectance value. A pre-set difference between the at least one test line's theoretical reflectance value and the at least one control line's theoretical reflectance value may activate a test result. Further, a pre-set difference between the at least one test line's theoretical reflectance value and the at least one control line's theoretical reflectance value may trigger an error. The error may withhold a test result.

In other embodiments, a lateral, capillary-flow elongated test strip includes a test zone, a control zone and a surface having a reflectance profile. The lateral, capillary-flow elongated test strip may have at least one reagent for the detection of at least one analyte in a sample. The test zone may include immobilized thereon a test zone capture agent that is adapted for capturing the at least one reagent. The control zone may include at least one control zone capture agent having a different binding affinity for the at least one reagent. The reflectance profile may be adapted to enable monitoring of the test strip continuously until the detection of the analyte. Typically, the test strip generates a detectable signal for detecting the analyte in the sample. In some examples, inadequate control line development, for instance according to reflectance and/or transmission at the control line, may trigger an error. In these examples, the error may trigger a signal to generate a no-result response.

The test strip may comprise a coding system having at least one reference code with a corresponding testing sequence. The testing sequence may include at least one temperature adjustment parameter. Further, the testing sequence may include an optical reader test parameter. The optical reader test parameter may include a reader channel selection. The reader test parameter may include an associated feature chosen from a standard curve, a dose-response curve and a combination thereof. The reader test parameter may include at least one associated positive control point and at least one associated negative control point. The coding system may include a color matrix. The color matrices may include a color chosen from red, blue, green and combination thereof. The color matrices may be associated with a corresponding diagnostic test. The coding system may include a bar code. The coding system may include an RFID tag.

The test strip may include a first end having a sample absorbing material. The test strip may include a peel strip to introduce sample onto the sample absorbing material. The peel strip may include a peel tab at one end of the peel strip to facilitate movement of the peel strip. The sample absorbing material may be adapted to receive about 0.1 to about 1.0 mL of a fluid. The sample absorbing material may comprise a dry cellulosic material. Further, the test strip may include an opposed second end having a reactor detector material. The test strip may include a releasing area having a mobile phase receptor for the at least one analyte. The test strip may be sized and adapted to be enclosed within a test strip cavity. Further, the test strip may be sized and adapted to be enclosed within a test strip cavity of a removable incubation module. In particular examples, the test strip may be sized and adapted to be enclosed within a test strip cavity of a removable incubation and optics module. In particular examples, the test strip is adapted for selecting the detection of a diagnostic test group chosen from an antibiotic analyte, toxic analyte, analyte class, a combination thereof and the like.

The test zone may include at least one analyte reference line having a theoretical reflectance value. The theoretical reflectance value may be associated with a flow parameter on the test strip. The test zone surface may include a first analyte reference line having a first theoretical reflectance value and a second analyte reference line having a second theoretical reflectance value. The control zone surface may include at least one control line having a theoretical reflectance value. For instance, the theoretical reflectance value may be an optical reflectance value. The control zone may include a first control line having a first theoretical reflectance value and a second control line having a second theoretical reflectance value. In some examples, the reflectance profile is adapted to enable monitoring of the test strip prior to the detection of the analyte. Further, the test result may be detected within about thirty to about sixty seconds.

In yet another embodiment, a lateral, capillary-flow elongated test strip includes a test zone including immobilized thereon a test zone capture agent adapted for capturing at least one binder, a control zone including at least one control zone capture agent having a different binding affinity for the at least one binder, a surface having a reflectance profile adapted to enable monitoring of the test strip and a coding system having at least one coding signal, for instance a coding to correspond to a testing sequence to characterize the test strip. The reflectance profile may include at least one flow reference area adapted to enable monitoring of a flow development along the assay, and at least one monitor reference area adapted to enable monitoring of detection of the analyte on the assay.

The testing sequence may include at least one temperature adjustment parameter. The testing sequence may include an optical reader test parameter. The optical reader test parameter may include a reader channel selection. The optical reader test parameter may include an associated feature chosen from a standard curve, a dose-response curve and a combination thereof. Further, the optical reader test parameter may include at least one associated positive control point and at least one associated negative control point. The coding system may include a color matrix. The color matrices may be associated with a corresponding diagnostic test. The coding system may include a bar code. The coding system may include an RFID tag.

In some examples, the test strip may include a first end having a sample absorbing material. The test strip may include a peel strip to introduce sample onto the sample absorbing material. The peel strip may include a peel tab at one end of the peel strip to facilitate movement of the peel strip. The sample absorbing material may be adapted to receive about 0.1 to about 1.0 mL of a fluid. The sample absorbing material may comprise a dry cellulosic material. The test strip may include an opposed second end having a reactor detector material. The test strip may include a releasing area having a mobile phase receptor for the at least one analyte. The test strip may be sized and adapted to be enclosed within a test strip cavity. Further, the test strip may be sized and adapted to be enclosed within a test strip cavity of a removable incubation and optics module. Typically, the test strip is adapted for selecting the detection of a diagnostic test group chosen from an antibiotic analyte, toxic analyte, analyte class, a combination thereof and the like, either quantitatively, qualitatively or both.

The test zone may include at least one analyte reference line having a theoretical reflectance value. Typically, the theoretical reflectance value is associated with a flow parameter on the test strip. The test zone may include a first analyte reference line having a first theoretical reflectance value and a second analyte reference line having a second theoretical reflectance value. The control zone may include at least one control line having a theoretical reflectance value. The theoretical reflectance value may be an optical reflectance value. A control zone may include a first control line having a first theoretical reflectance value and a second control line having a second theoretical reflectance value. The theoretical light reflectance measurement may comprise a no-flow development theoretical value. The no-flow development value may be a reflectance value of about 85. The reflectance value of greater than about 85 may generate a signal to deactivate the detection of the analyte.

In other examples, the flow reference area may include at least one downstream flow reference line. The downstream flow reference line may include a theoretical reflectance value after the flow reference line receives reagent flow thereon. The flow reference area may include an intermediary flow reference line and a downstream flow reference line. The intermediary flow reference line may include a theoretical reflectance value after the flow reference line receives reagent flow thereon. The theoretical light reflectance measurement may comprise a no-analyte pre-test development theoretical value. The test result reference area may include at least one test line having a theoretical reflectance value. The test result reference area may include at least one control line having a theoretical reflectance value. The test result reference area may include at least one test line having a theoretical reflectance value and at least one control line having a theoretical reflectance value. A pre-set difference between the at least one test line's theoretical reflectance value and the at least one control line's theoretical reflectance value may activate a test result. Further, a pre-set difference between the at least one test line's theoretical reflectance value and the at least one control line's theoretical reflectance value may trigger an error. Typically, the error withholds a test result, including generating a no-result response.

**In** yet another embodiment, in an assay system having an incubator and a reader to generate a test result from an assay, a sensor may be adapted to continuously monitor the assay while the incubator incubates the assay and the reader generates the test result. The sensor may be adapted to deactivate the incubator when the sensor detects an aberration on the assay. The sensor may be an optical detector. The optical detector may be adapted to detect a reflectance value. The assay may include at least one test zone and at least one control zone, and whereby the reflectance value is a comparison between a reflectance value at the test zone and a reflectance value at the control zone. Further, if the reader and/or incubator hood is opened during incubation or reading, a signal may generate a no-result response. Additionally, if the assay is removed before a test result is generated, a signal may generate a no-result response.

In some examples, the assay may be deactivated when the sensor detects a reflectance value on the assay that is inconsistent with a predetermined theoretical reflectance value on the assay. For instance, a reflectance value on the assay that is inconsistent with the theoretical reflectance value may indicate an inadequate flow on the assay. Further, a reflectance value on the assay that is inconsistent with the theoretical reflectance value may indicate a prior analyte development on the assay. Similarly, a reflectance value on the assay that is inconsistent with the theoretical reflectance value may indicate a contaminated optical path.

In other examples, the sensor may be adapted to deactivate the reader when the sensor detects an aberration on the assay. The sensor may be an optical detector. The optical detector may be adapted to detect a reflectance value. The assay may include at least one test zone and at least one control zone, and whereby the reflectance value is a comparison between a reflectance value at the test zone and a reflectance value at the control zone. A no-result response may be generated when the sensor detects a reflectance value on the assay that is inconsistent with a predetermined theoretical reflectance value on the assay. A reflectance value on the assay that is inconsistent with the theoretical reflectance value may indicate an inadequate flow on the assay. Further, reflectance value on the assay that is inconsistent with the theoretical reflectance value may indicate a prior analyte development on the assay. Likewise, a reflectance value on the assay that is inconsistent with the theoretical reflectance value may indicate a contaminated optical path.

The sensor may be a decoding sensor. The decoding sensor may be chosen from a color sensor, a RFID reader, an OCR reader, a barcode reader and a combination thereof. Typically, the sensor is triggered with an activation element chosen from a hood sensor, an incubator sensor, a proximity switch, a trigger switch and a combination thereof.

The apparatus may include a housing that is adapted to substantially enclose the reader and the incubator. The housing may include insulation adapted to withstand deformation during the incubation. The housing may also include a cavity adapted to secure the assay and receive light from the reader. The cavity may include an optical aperture to receive light from the reader. The cavity may include an adjustable fastener adapted to position the cavity in an optical path with the reader. The cavity may include insulation adapted to withstand deformation during an incubation period. The assay may be a lateral, capillary-flow test strip.

In particular examples, the system may include a user interface. The user interface may include an integrated circuit board, for example to support a display board. The user interface may also be adapted to view flow development. Similarly, the user interface may be adapted to view the test result, including a no-result response. The user interface may also be adapted to view flow development after the reader has detected at least one flow development on the assay.

In another embodiment, a lateral flow assay system to generate a test result from an assay includes an incubator that is adapted to incubate the assay and a reader that is adapted to read a diagnostic test on the assay. The assay may undergo a change when contacted with a sample to generate the test result.

In some examples, the system includes a removable assay module. The removable assay module may include an assay cavity adapted to align the assay with the reader. The assay may be a lateral flow test strip. Thereby, the assay cavity may be sized to receive the lateral flow test strip. The removable assay module may include a hood. The hood may enclose the assay in a closed testing position and expose the assay in an open access position.

Further, the removable assay module may include a bottom face adapted to align with at least one light aperture on the reader. The bottom face may include an adjustment fastener adapted to secure the assay cavity in an optical alignment with the reader. The bottom face may also include an engagement lip to position the bottom face with the reader. The removable assay module may include at least one optical window. The removable assay module may be adapted to be removed from the system and cleaned from debris.

In some examples, the incubator includes an insulated base. The incubator may be a temperature adjustable incubator. The temperature adjustable incubator may include at least one temperature control. Thereby, the temperature adjustable incubator may include localized temperature variations. For instance, the incubator may compensate for localized temperature variations. The incubator may compensate for localized temperature variations with an analog, proportional circuit. In other examples, the incubator may compensate for localized temperature variations with a digital control circuit, for instance by utilizing a PID algorithm or PID controller. Further, the temperature adjustable incubator may include an embedded temperature sensor. The temperature adjustable incubator may include a potentiometer. The incubator may include a heater. The heater may be chosen from a ceramic heater, a resister heater element and the like. Similarly, the incubator may include a cooling system. In yet other examples, the incubator incubates the assay in a means for creating an incubation environment.

The reader may perform continuous image detection of the assay to generate the test result. The continuous image detection may include monitoring a pre-flow development along the assay, including monitoring for excessive flow and inadequate flow along the assay. The reader may include a light source oriented in a predetermined pattern with respect to the assay. The light source may include a first mirror below the light source. The light source may include a focusing lens adapted to receive light from the first mirror. Further, the light source may include a second mirror positioned to direct light from the focusing lens to the reader.

In particular examples, the reader may include a sensor. The sensor may be an optical detector that is aligned with a light source for detecting transmission of light through the assay. For instance, transmission embodiments herein may include analysis of refracted light from the assay. The sensor may be a decoding sensor. The decoding sensor may be adapted to decode at least one reference code having a corresponding testing sequence on the assay. Further, the reader may include multiple channels. Each of the channels may include an associated feature chosen from a standard curve, a dose-response curve, a positive cutoff value, a negative cutoff value and the like.

In yet further embodiments, a method of generating a test result from an assay includes incubating the assay in an incubation environment and reading a diagnostic test on the assay concurrently as the incubator incubates the assay. The method may include sensing the assay continuously while the incubator is incubating the assay. The method may include deactivating the assay when sensing an aberration on the assay. The method may include removing a removable assay module, for example for cleaning debris, or the like, from the assay module. The method may include adding a test sample to a test medium to create the assay. The method may also include enclosing the test medium within the reader. The method may include positioning a sensor relative to the test medium so that a change on the test medium is detectable by the sensor. The method may include decoding a reference coding on the assay. Thereby, the method may include selecting a channel in the reader corresponding to the reference coding on the assay. Further, the method may include incubating the assay within the incubator according to the reference coding on the assay.

In one embodiment, a method for managing test data includes generating a test result from a testing instrument reader; linking an application on a partner device to the testing instrument, thereby enabling test result output communication between the testing instrument and the partner device; subscribing a first test result output from the instrument to the partner device; and transmitting at least one second result output associated with the first output and selected from the group consisting of an operator identification, a sample identification, a lot number, a geographical location, a geographical coordinate, a sample note, and a test result note.

In particular examples, the method includes establishing authorized connection between the instrument and the partner device. Further, the partner device application may scan for an enabled testing instrument. The method may include real time exporting of the result outputs from the testing instrument. In certain examples, the method includes relaying result outputs from the partner device to an external storage configuration. In certain examples, the method may include a plurality of testing instruments.

In another embodiment, a method for relaying test data generated from a sample on a testing instrument includes performing a diagnostic test on the testing instrument; interfacing the testing instrument with a mobile partner device having a corresponding data communication interface to establish enabled data communication with the testing instrument; transforming the test result into a result output format suitable for transmission, and establishing data communication exchange of the result output between the testing instrument and the partner device; and relaying the result output from the partner device to an external storage configuration. In certain examples, the testing instrument may include one or more of the following: a housing, a receiving port to receive the sample on a sample apparatus, a reading device to generate a test result from the sample apparatus, and a data communication interface.

In particular examples, the method includes establishing data communication between the testing instrument and the partner device, for instance linking an application on the partner device to the testing instrument. The partner application may scan for an enabled testing instrument. The partner application may subscribe data from the testing instrument. The method may include real time exporting of the result output from the testing instrument for logging a plurality of subsequent sample result outputs. Further, the method may include merging the plurality of sample result outputs and associated geographical locations, and mapping the plurality of result outputs. And in particular examples, the method may include generating a map display indicative of a toxin mapping outbreak. The method may include establishing authorized wireless connection between the testing instrument and the partner device, for instance with a Bluetooth^{®} Low Energy (BLE), dongle, or similar system. The method may include establishing a host IP address connection between the partner device to the external storage configuration.

In some examples, performing the diagnostic test includes receiving a test strip sample apparatus and imaging the test strip sample apparatus to generate the test result. In some examples, performing the diagnostic test includes incubating the sample apparatus. In certain examples, the method includes transmitting at least one sample identifier corresponding to an individual sample test result selected from the group consisting of an operator identification, an apparatus identification, a sample identification, a lot number, a geographical location, a geographical coordinate, a sample note, and a test result note. In particular examples, relaying to the external storage includes transmitting to a remote host website. Further, in particular examples, relaying to the external storage includes transmitting to a remote host server. In certain examples, the partner device comprises a smart phone having a data processing program as a downloadable application program. The partner device may have an indicator, and when activated providing a pairing signal, and wherein the indicator providing a visual indicia of pairing to the testing instrument. The method may also include establishing a secondary messaging data communication exchange between the testing instrument and the partner device.

In yet another embodiment, a method for use with a testing instrument and a host site adapted to support test result data includes connecting to an enabled testing instrument having a first mode of operation to perform at least one test on a sample, and in a second mode the instrument having a data communication interface communicating a result output transmission; receiving authorized result output transmissions; and transforming a plurality of the result outputs into a data display.

In certain examples, the method includes storing the plurality of result output data in a first database. Establishing the result output communication may first include establishing data communication with a partner device. For instance, the partner device may be a mobile phone, a tablet, a general purpose computer, a PDA, a digital media player, a digital camera, a wireless information device, and the like. In some examples, the data may ensure that properly tested food products are delivered most efficiently to an assigned destination depending on test results. In other examples, the data may be collected from a multiplicity of sites and sources and combined, for illustrative purposes only, into a single database using low cost tools and existing test instruments.

Still another embodiment of the present disclosure includes a central station external storage configuration, for instance a central station to be a Web Hosted external storage configuration. In particular examples, the external storage configuration is assigned a public, static IP address to which any of the available, deployed instruments transmit test data, when available.

Another embodiment of the disclosure includes an integrated system of data handling with minimal operator intervention. In some examples, setup at the instrument requires downloading and installing the app on the smart-phone, attaching the blue-tooth adapter to a power source, pairing the Bluetooth^{®} device, or the like device, to the smart-phone and then launching the app. Real time display of the test data on the smart-phone may provide the user that the test data was properly transmitted to the phone and allows for notes to be appended to the test data as shown and described herein.

In certain examples, with GPS enabled in the smartphone, the test data may contain the latitude and longitude where the test was performed. In these methods, once the test data packet has been collected to the phone, the app handles communication with the host central station attempting transfers when adequate signal strength is available. Integrated communication protocol ensures that the data remains buffered in the phone until a signal from the host indicates successful collection.

In one embodiment, a method of inhibiting transfer of a product in a delivery system includes performing a diagnostic test; relaying the test result to an external administrator portal; generating a substantially continuous operating signal in a protocol converter and transmitting the signal to the administrator portal; receiving in the protocol converter a trigger condition, when present, from the administrator portal; and triggering a relay adapted in inhibit the downstream transfer of product. The testing instrument may have a receiving port to receive a sample on a sample apparatus, a reading device generating a test result from the sample apparatus, and a data communication interface.

In some examples, receiving the trigger condition includes receiving at least one positive test result. Performing the diagnostic test may include receiving a test strip sample apparatus and imaging the test strip sample apparatus to generate the test result.
Further, performing the diagnostic test may include receiving a plate sample apparatus and imaging the plate sample apparatus to generate the test result. Still further, performing the diagnostic test may include receiving a swab sample apparatus and analyzing the swab sample apparatus to generate the test result.

In certain examples, interfacing the testing instrument with a mobile partner device includes establishing enabled data communication with the testing instrument. The method may include real time exporting of a result output from the testing instrument logging a plurality of subsequent sample result outputs. Further, inhibiting transfer of product may include activating a relay triggering event, for instance an audible indicator, visual indicator, an access arm, a barrier gate, a solenoid valve, a combination thereof, and the like.

In one embodiment, a communication protocol converter includes a data communication interface; a peripheral processor platform in data communication with an external administrator portal; and at least one relay module in electrical communication with the processor platform and at least one external peripheral, and wherein a trigger condition transmission from the external administrator portal activates the at least one relay module.

In certain examples, the device includes an enclosure enclosing the peripheral processor platform and the relay module. The enclosure may have a metal enclosure that is generally positioned within a data communication range of a test instrument. The data communication interface may include a WI-FI(TM) connection. The data communication interface may include an Ethernet connection. The relay module may include a single pole double throw relay. The single pole double throw relay may include two independently controlled contact relays. The single pole double throw relay may include two dry contact relays. In other examples, the relay module includes dual single pole double throw latching relays. The relay module may include an input output port adapted to trigger the relay. The processor platform may interface any number of peripherals, including a sensor, identification device, and the like. The device may include a power supply. Further, the device may include a user interface.

Another embodiment includes a product delivery assembly having a testing instrument; a host database adapted to support test result data generated by the testing instrument; a communication protocol converter in data communication with the host database; and a product transfer inhibitor, wherein the product transfer inhibitor is activated by the protocol converter after receiving a trigger condition.

In further alternative embodiments, a method for managing test data includes generating a test result from a testing instrument; linking an application on a partner device to the testing instrument, thereby enabling test result output communication between the testing instrument and the partner device; subscribing a first test result output from the instrument to the partner device; and transmitting at least one second result output associated with the first output and selected from the group consisting of an operator identification, a sample identification, a lot number, a geographical location, a geographical coordinate, a sample note, and a test result note.

In particular examples, the method includes establishing authorized connection between the instrument and the partner device. Further, the partner device application may scan for an enabled testing instrument. The method may include real time exporting of the result outputs from the testing instrument.

In certain examples, the method includes relaying result outputs from the partner device to an external storage configuration.

In another embodiment, a method for relaying test data generated from a sample on a testing instrument includes performing a diagnostic test on the testing instrument; interfacing the testing instrument with a mobile partner device having a corresponding data communication interface to establish enabled data communication with the testing instrument; transforming the test result into a result output format suitable for transmission, and establishing data communication exchange of the result output between the testing instrument and the partner device; and relaying the result output from the partner device to an external storage configuration. In certain examples, the testing instrument may include one or more of the following: a housing, a receiving port to receive the sample on a sample apparatus, a reading device to generate a test result from the sample apparatus, and a data communication interface.

In particular examples, the method includes establishing data communication between the testing instrument and the partner device, for instance linking an application on the partner device to the testing instrument. The partner application may scan for an enabled testing instrument. The partner application may subscribe data from the testing instrument. The method may include real time exporting of the result output from the testing instrument for logging a plurality of subsequent sample result outputs. Further, the method may include merging the plurality of sample result outputs and associated geographical locations, and mapping the plurality of result outputs. And in particular examples, the method may include generating a map display indicative of a toxin mapping outbreak. The method may include establishing authorized wireless connection between the testing instrument and the partner device, for instance with a Bluetooth^{®} Low Energy (BLE), dongle, or similar system. The method may include establishing a host IP address connection between the partner device to the external storage configuration.

The above summary was intended to summarize certain embodiments of the present disclosure. Embodiments will be set forth in more detail in the figures and description of embodiments below. It will be apparent, however, that the description of embodiments is not intended to limit the present invention, the scope of which is properly determined by the appended claims.

### Brief Description of the Drawings

Embodiments of the disclosure will be better understood by a reading of the Description of Embodiments along with a review of the drawings, in which:
Figure 1 is a front perspective view of one embodiment of a lateral flow assay system, with elements removed for clarity;
Figure 1a is a top perspective view of the embodiment introduced in Figure 1;
Figure 2 is a front perspective view of one embodiment of a lateral flow assay assembly;
Figure 3 is a side view of the embodiment introduced in Figure 1;
Figure 4 is an exploded view of one embodiment of a lateral flow assay system;
Figure 5 is an isolated side perspective view of the embodiment introduced in Figure 1 in an operating position, with elements removed for clarity;
Figure 5a is an isolated perspective view of one closure embodiment introduced in Figure 1;
Figure 5b is an exploded perspective view of the embodiment shown in Figure 5a;
Figure 5c is an isolated perspective view of one closure embodiment introduced in Figure 1;
Figure 5d is an exploded perspective view of the embodiment shown in Figure 5c;
Figure 6 is an isolated side perspective view of one embodiment of post-tested lateral flow assay;
Figure 7 is an isolated top perspective view of an embodiment introduced in Figure 1, with elements removed for clarity;
Figure 7a is an side perspective view of the embodiment shown in Figure 7;
Figure 8 is a top view of an embodiment introduced in Figure 1, with elements removed for clarity;
Figure 9 is a front perspective view of one embodiment of assay components useful for any of the inventions shown and described herein;
Figure 10 is a block diagram general system overview according to an embodiment of the disclosure; and
Figure 11 is a diagram overview of a relay module introduced in Figure 10.

### Description of Embodiments

In the following description, like reference characters designate like or corresponding parts throughout the several views. Also in the following description, it is to be understood that such terms as "forward," "rearward," "left," "right," "upwardly," "downwardly," and the like are words of convenience and are not to be construed as limiting terms. It will be understood that the illustrations are for the purpose of describing embodiments of the disclosure and are not intended to limit the disclosure or any embodiment in accordance with the invention thereto. The scope of the present invention is solely limited as defined by the appended claims.

In some embodiments, the testing instrument is a lateral flow assay system configured to receive an assay sample apparatus and analyze the assay to generate a diagnostic test result. Typically, the assay sample apparatus is a lateral-flow test strip. However, it is within the scope of this disclosure for any of the assay apparatuses herein to be assays other than lateral, including but not limited to capillary-flow test strips. Further, any of the reader, incubator, combined reader/incubator devices and systems shown and described herein may include any optical analysis readers, which often include an imaging device, a light source, and an imaging detector, including a sensor aligned such that the light from the light source shines onto the assay and is then imaged/reflected onto the imaging sensor. An example of reader components useful in embodiments herein are described in PCT/US2011/49170 filed August 25, 2011 and U.S. patent No. 6,124,585 A

(Apparatus for measuring the reflectance of strips having non-uniform color), issued September 26, 2000.

Typically, the presence and, in some cases, the concentration, of an analyte on an assay may be determined by measuring, for instance, the imaging, optical reflectance, and the like from an area of development on the assay. In some examples, percent reflectance may be used to determine the result. In other examples, transmission may be used to detect the result. For instance, the assay may be transparent and include a surface having a transmission profile, similar to the reflectance profile discussed below. This structure and function described in these references may be adapted by those of ordinary skill in the art in accordance with the disclosure herein to obtain a functioning unit.

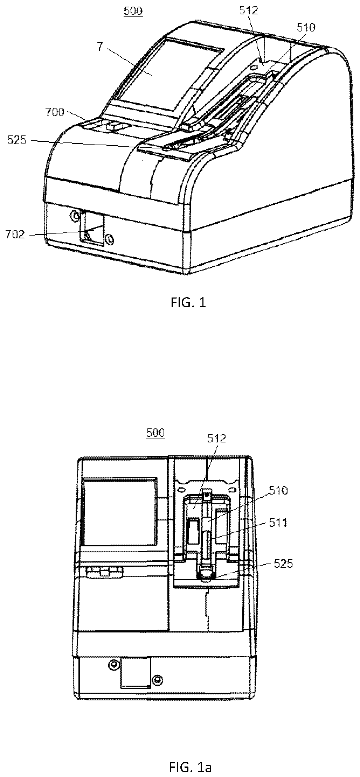

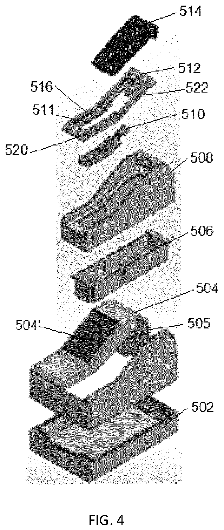

Often over-pipetting, or other sample delivery, to an assay may create flooding of the assay and generate unreliable, inaccurate test results. Figures 1-8 introduce elements and embodiments of a offset, non-planar, and the like optics module 500 compatible with any of the reader elements features shown and described herein to minimize, or eliminate, uncertainties and undesirable results of sample flooding. Applicants have unexpectantly discovered non-planar assay development and testing alleviates many of these issues.

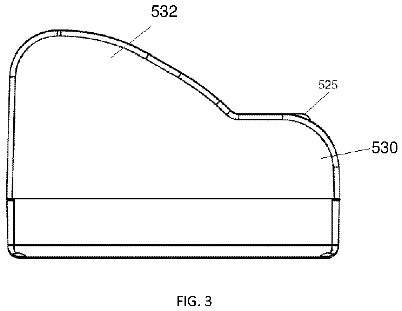

As introduced in Figures 1 and 3, the non-planar optics module 500 generally includes a distal portion 532 aligned adjacent and substantially offset from a proximate portion 530. The distal portion 532 may include a protruding overhang lip 525 for efficient and convenient access to manipulate any assay shown and described herein about the device, for instance during loading and unloading. The overhang lip 525 allows a user to conveniently align a proximate portion of the assay to extend about the optics module in an operating position, for instance the proximate portion of the assay may protrude external of the device.

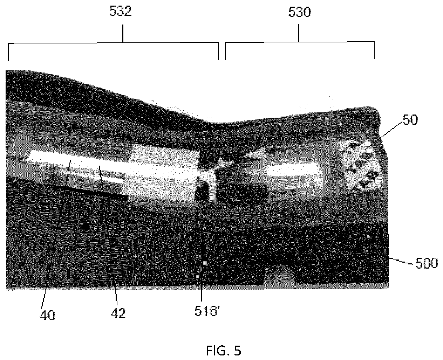

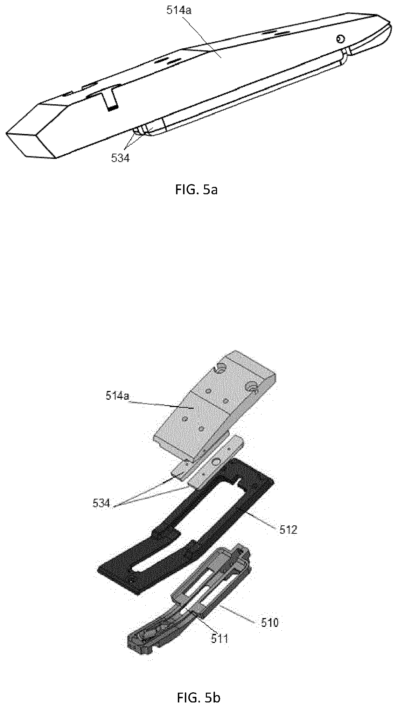

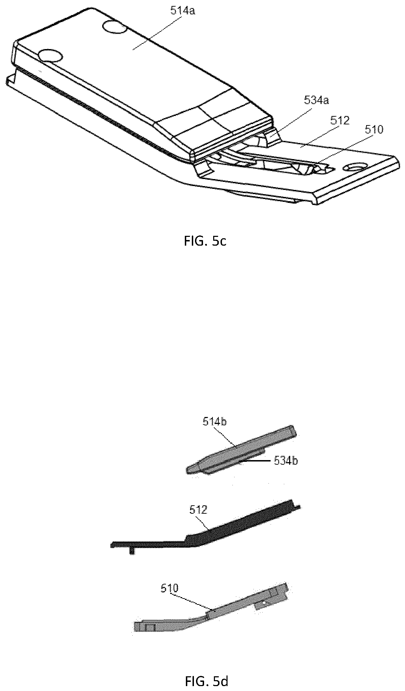

In particular embodiments, as shown in Figures 1-4, the non-planar optics module 500 may include a power switch 700, electrical communication port 702, lower support 502, interface shell 504 having a rear portion 505, bracket 506, and base 508 supporting positioning of the offset frame 512 to provide the non-planar positioning. The aperture carrier 510 aligning any of the optics shown and described herein is generally supported within the offset frame 512. The offset frame 512 generally includes a lower tier platform 520 aligned with opposing upper tier platform 522, for instance at pivot point 516. A cover 514, or the like, may secure any of the elements shown and described herein. In certain embodiments the cover 514 is a spring loaded cover. As introduced in Figures 5a and 5b, a spring loaded cover may include spring loaded supports 534 aligned between cover 514a and offset slide frame 512 to allow ease of access for aligning/removing an assay about the device. While other embodiments of the cover include a unitary, including at
least a substantially integral, cover(s) to provide access for aligning/removing an assay about the device in any of the examples shown and described herein. As introduced in Figures 5c and 5d, embodiments of the integral cover includes cover 514b aligned with integrated supports 534b about the offset slide frame 512. Those of ordinary skill in the art having the benefit of this disclosure will recognize additional cover, latch, door, window, and the like features to provide access to and/or conceal, house, etc. the assay during operation.

In any of the examples and embodiments herein, the planar proximate portion 530 may align assay elements in a general planar position, whereas non-planar distal portion 532 aligns assay elements in a general non-planar position. For instance, as shown and described herein any of the test lines 40, control lines 42, and combinations thereof may be aligned adjacent, including at, above, or substantially adjacent, a pivot point 516' created by the assay positioning within the cradle module. In particular examples, the non-planar distal portion 532 is aligned about ten degrees to about thirty degrees offset from the planar proximate portion 530. For instance, the non-planar distal portion 532 may be aligned about twenty degrees offset from the planar proximate portion 530. Other examples include a variety of degree offset between the distal portion 532 and proximate portion 530. In particular examples, the optics module may image the assay adjacent a bend in the assay 570 in an operating position, for instance at point 516'.

As illustrated, a generally planar assay test strip is inserted into cradle module 500, i.e. along proximate portion 530, and then flexes generally non-planar as the assay test strip protrudes into the non-planar distal portion 532. Unexpectantly, Applicants have discovered wicking and flow elements allow sample flow to proceed along the assay strip into the proximate portion 530, for instance against the pull of gravity, while the non-planar alignment, for instance against the pivot point, prevents excess sample flow into the testing areas of the distal portion 532. In particular examples, about forty percent to about seventy percent, including about sixty percent, of the length of the assay test strip may be aligned in non-planar distal portion 532 in the operating positions shown and described herein. Other examples include a variety of length ratios between the distal portion 532 and proximate portion 530, for instance to adjust to site testing conditions, multiple test and control line development, analyte testing of interest, and the like as recognized by those skilled in the art having the benefit of this disclosure.

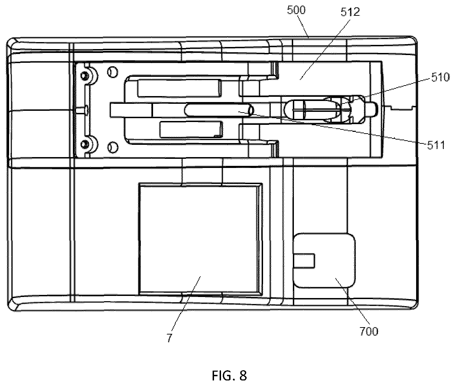

As introduced in Figure 8, useful elements of a lateral flow assay system are shown for application in the testing positions. Lateral flow assay system shown and described herein typically include a reader, a combined reader and incubator, and the like. Readers may include an imaging camera, device, detector, or the like, such as a sensor, while any of the incubator embodiments herein may additionally include insulated base, heat shield, or the similar incubation environment component to deliver and maintain a desired testing temperature. In some embodiments, the insulated base is a removable assay module. In certain examples, reader first monitors an assay for one, or more, monitoring values, including flow rate, prior analyte
development and debris. In various examples, if a proper monitoring value is detected by the system, incubator incubates the assay and reader generates a test result.

As shown in Figure 8, lateral flow assay system is configured to receive an assay and analyze the assay to generate a diagnostic test result. Typically, the assay is a lateral-flow test strip. However, it is within the scope of this disclosure for any of the assays herein to be other flow assays.

Any variety of housing may enclose the optics module 500, reader, and/or incubator as an integral diagnostic unit. Other embodiments include a housing that partially encloses components of lateral flow assay system. In certain examples, cavity is surrounded by insulating material, such as a plastic material, for example a thermoplastic such as polyoxymethylene, known as Delrin (DELRIN is a registered trademark of DuPont) to insulate cavity, and does not deform when heated to the temperatures required for generating a test result.

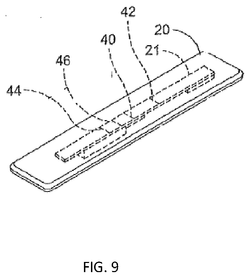

Applicants have unexpectantly discovered benefits of the non-planar systems and assemblies herein when operating test strips with multiple line developments in various areas on the test strip, as described hereinafter and introduced in Figure 9, for instance along multi-analyte detection test strips. For instance, multi-analyte detection test strips testing for multiple drug families, and the like, may support variable binder strengths with rapidity of binding limitations impacted by over-pipetting, sample pooling, improper flow, and the like.

Any of the readers shown and described herein may comprise a variety of light sources, including a light bar(s), for instance aligned along an angled pitch of the device, an incandescent bulb, a fluorescent tube, a light emitting diode or the like. In some examples, the light source may be an array of discrete light sources, for instance colored light emitting diodes chosen from red, green, blue and a combination thereof. In yet other examples, the light source may be an individual light source, for instance a singular diode. Typically, the light source is configured and current driven to emit an illumination pattern suitable for reflecting onto the assay, for instance along an elongated test strip. In particular examples, light can be directed to the assay, for example through aperture 511 via the cavity. In certain examples the light may be reflected off the assay, back through the cavity aperture and directed to an optical detector.

In one example, an optics circuit board may have a plurality of light emitting diodes (LEDs) mounted thereon, for instance in a predetermined pattern around light-emitting aperture. The LEDs may be mounted on one side of optics circuit board. An optical detector array may be mounted to the reverse side of the same optics circuit board. Further, a first mirror may be positioned below the light-emitting aperture at a pre-determined angle, for instance about three hundred and fifteen degrees, to circuit board. A second mirror may be positioned beneath the optical detector, for instance at an angle of about two-hundred and twenty degrees to circuit board, such that a substantially ninety-degree angle exists between first and second mirrors. A focusing lens may be positioned between the first and second mirrors. Thereby, the light emitted from the LED array may illuminate an assay and then light is reflected therefrom through light-emitting aperture, for instance to the first mirror, from the first mirror through the focusing lens to the second mirror, and from the second mirror onto the optical detector. In that respect, the light striking the optical detector may cause the optical detector to generate a measurable voltage. In additional examples, a light processor may be coupled to the light source to actuate the light source and provide each light with the appropriate current to generate the desired emission pattern. The light processor may be used to read and store data from the optical detector. The light processor may also be used to adjust the output of an array of discrete light sources such that the emission pattern striking the light detector array has a uniform intensity. The lighting processor may include data storage for the desired light-emission pattern.

Further, the light source may be an LED light source, including a red, green, blue LED device in a single package. For instance, the LED light source for the color sensor can also be three discrete LEDs. Similarly, a single white LED and three discrete photodiodes, with narrow bandwidth responses at the red, green and blue wavelengths, can be used as a detector front-end.

In yet other examples, one LED is used with an optional feedback loop. The feedback loop can use a photodiode to sense light output variation from the single LED. If light output changes, a signal is sent so that an appropriate adjustment can be made, for example, an increase or decrease in current to the LED. Reflectance changes can be the result of the binding of a label, including color particles such as gold beads. Reflectance changes may also be a result of contaminants and interferences in the optical path.

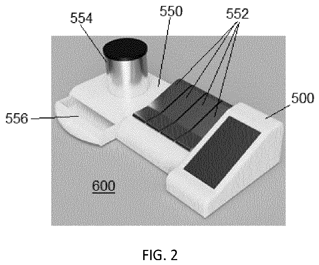

Some embodiments include multiple readers positionable about the modular interface 600 (for instance shown in Figure 2) and/or readers may be programmed with multiple channels, each of which may have separate parameters associated with a related diagnostic test. Each channel selection parameter may include a standard curve, a dose-response curve and the like. Particular examples include any variety of offset alignment cradles 500 positioned about a mother board, for instance slots 552 to support multiple optics units 550 beneficial for multiple testing simultaneously. For instance, particular modules provide specific test parameters for multiple test strips with identical specifications or for test strips having unique incubation temperatures, incubation time frames, test development specification, monitoring specifications. The modular interface may further house any variety of testing element, including drip trays 556, strip holders 554, lens features, and the like as understood by those skilled in the art having the benefit of this disclosure.

Embodiments include any variety of user interface on the reader, modular interface, or tangential electronics, including but not limited to, handheld devices, phones, computers, on-board vehicle analysis, for instance during batch pickup, vehicle displays, and the like. In particular examples, a user interface includes an integrated circuit board supporting a display board. In one example, user interface allows a user to view flow development. Further, user interface may allow a user to monitor a subsequent flow development after reader has already detected at least one flow development on the assay. Similarly, user interface may display a final test result, including a no-result response.

Figure 9 illustrates one embodiment of assay elements for particular diagnostic tests having components useful for embodiments herein include those described in U.S. Patent Nos.: 7,410,808, issued August 12, 2008; 7,097,983, issued August 29, 2006; 6,475,805, issued November 5, 2002; 6,319,466, issued November 20, 2001; 5,985,675, issued November 16, 1999 and U.S. Patent Application 11/ 883,784, filed August 6, 2007. In particular embodiments, any of the embodiments in accordance with the invention herein may inhibit the transfer of contaminated and/or poor quality product, for instance triggered by a positive test result, into a mix of good product, for instance a negative test-result product. One example of the indicator triggered by the examples herein includes audible and/or visual indicators, for instance positioned in a receiving bay or along various points in the process line to alert detection of positive-test result product. Further inhibitors may include preventing a tanker truck from access to a receiving bay via a gate access control arm, barrier gate, or inhibiting the flow of product via a solenoid valve. Those of ordinary skill in the art having the benefit of this disclosure will recognize additional inhibitors activated by any of the examples and embodiments shown and described herein.

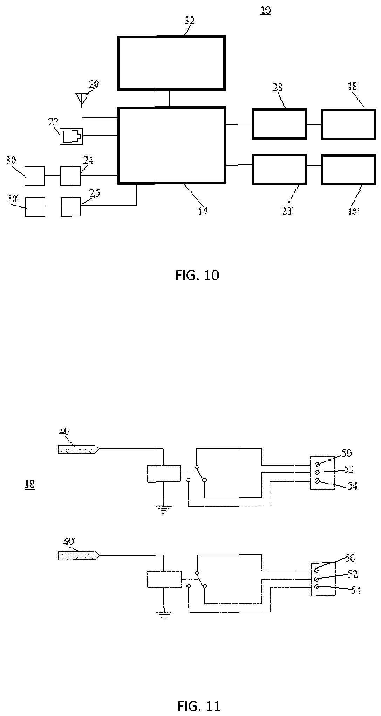

For instance, various embodiments include communication protocol converters in data communication with an administrator portal, database, software, or the like, to provide the data exchange and triggering events to any of the product transfer inhibitors shown and described herein. Figure 10 illustrates components of one communication platform embodiment having a display, a peripheral processor platform 14, a plurality of data communication interfaces, including, but not limited to, WiFi (TM) interface, Ethernet interface 22, channel connections 28, 28' to receive relay modules 18, 18'.

In particular examples, plug-in modules 18, 18' may be a single pole double throw relay. The single pole double throw relay may have two independently controlled dry contact relays. **In** certain examples the single pole double throw relay may activate any of the indicators shown and described herein. In other examples, plug in modules 18, 18' may be dual single pole double throw latching relays, wherein the relays latch to reduce, or minimize, current to long term activation. Further, the relays may be rated for 250VAC at 16 amps of current, while other examples include additional loads and current to meet a particular on-site demand.

In certain examples, the systems include on board diagnostics to determine overall health to generate any of the operating signals shown and described herein. A programmable trigger condition from the portal such as a "Positive" test result may initiate a transmission to take inhibiting action. Further, the administrator portal, or the like, may allow IP address entry for the device. Each of the channels may have Independent control and the administrator portal may catalog/operate any variety of devices and systems.

In particular modules, the testing instrument interfaces with a mobile partner device having a corresponding data communication interface, thereby establishing enabled, i.e. approved, authorized, and/or available, data communication, including any of the data communication systems shown and described herein, with the testing instrument. One example of a partner device receiving test result data communication prior to relaying the test result output to the external storage configuration. In particular examples, the module may include linking an application, for instance a downloadable program application, on the partner device to the testing instrument. Further, the module may include establishing data communication exchange of a result output between the testing instrument and the partner device. Still further, the module includes establishing a secondary messaging data communication, including but not limited to email, text, and the like, secondary message exchange between the testing instrument and the partner device.

Any of the testing instruments herein may interface with a partner device to relay test results to an external storage configuration and the like, or in the alternative the testing instrument may interface directly with the external storage configuration, to provide any of the advantages shown and described herein. In particular examples, the partner device is a smart phone, however other partner devices may include a tablet, a general purpose computer, a PDA, a digital media player, a digital camera, a wireless information device, and the like.

Those skilled in the art having the benefit of this disclosure, and incorporated testing instruments and sample apparatuses, will recognize additional interfacing arrangements between the partner device and the testing instrument, communication exchange between the partner device and the external storage configuration, direct exchange between the testing instrument and the external storage configuration, and other data communication and storage features within the spirit of these inventions.

Generally, lateral flow assay 21 is generally planar membrane-based test device prior to operation/testing in any of the examples shown and describe herein, in which a sample that is suspected of containing the analyte of interest is placed at or near one end of the membrane strip. The sample is carried to the opposite end of the membrane strip by a mobile phase that traverses the membrane strip, for example by capillary action. While traversing the membrane strip, the analyte in the test sample, if any, encounters one or more reagents. The reagents can include binders for the analyte. Binders can be mobile and, therefore, flow with the sample or be immobilized on the test strip as a capture agent. Depending on the test configuration, either the analyte binder, the analyte itself, or some other reagent in the test system, will be captured by the immobilized capture agent and, thereby, produce a detectable signal. The signal can be generated by a label provided within the assay. The detectable signal can be measured, such as by optical reader. As shown and described herein, Applicant has unexpectantly discovered the advantage of aligning the assay or a portion thereof in a non-planar position to minimize impact of in-line sample delivery, including dripage and the like, during mobile phase traversing along the assay.

Assay 21 may include at least one test line 40 in a test zone and at least one control line 42 in a control zone. A theoretical reflectance value may be a comparison between a reflectance value at test line 40 and a reflectance value at control line 42. A pre-set difference between a theoretical reflectance value at test line 40 and a theoretical reflectance value at control line 42 may activate lateral flow assay system, including reader, to generate a test result. Further, a separate pre-set difference between a theoretical reflectance value at test line 40 and a theoretical reflectance value at control line 42 may trigger an error. Triggering of the error may cause the microprocessor to withhold a test result, including generating a no-result response, or deactivating reader and/or incubator. Other embodiments include a comparison between a transmission value at test line 40 and a reflectance value at control line 42.

Rapid result assays are beneficial for any of the non-planar testing examples and embodiments shown and described herein. For instance, rapid result assays provide a definitive test result within about fifteen seconds to about one minute, including a definitive test result within about thirty seconds. In other examples, the reader generates a test result within about ten seconds to about fifteen minutes. To increase the speed of a test result, Applicant has unexpectantly discovered optimizing the overlap of a binder application area over a nitrocellulose membrane on the assay allows a definitive test result beneficial for any of the non-planar testing processes and embodiments shown and described herein. In one example, a three millimeter overlap of the binder application area over the nitrocellulose membrane optimizes contact surface area between the binder application area and the nitrocellulose membrane to increase flow and release of the sample to meet the thirty second test herein. In particular embodiments, the binder application area can be, for example, POREX^{®} (POREX is a registered trademark of Porex Technologies Corp, Georgia USA), attached to a solid support. In addition, in certain embodiments the nitrocellulose membrane may be optimized to meet the thirty second rapid test herein, for instance the nitrocellulose membrane may ensure sample properly wicks efficiently and rapidly quickly across the membrane to generate the rapid test result analysis shown and described herein. However those skilled in the art having the benefit of this disclosure will recognize additional binder application area materials and/or spacing of the binder application area about the nitrocellulose membrane.

Further, Applicant has unexpectantly discovered optimizing the length of an absorbent pad at the distal portion of the assay enhances capillary action to adjust the speed of sample flow to meet the demands of the non-planar testing, for instance the thirty-second rapid test herein. In one example, a thirty-one millimeter length absorbent pad optimizes sample flow along the assay.

A reflectance value on the assay that is inconsistent with the theoretical reflectance value may indicate an inadequate flow in the mobile phase on the assay. For instance, assay 21 may have a flow line 44 with a corresponding theoretical light reflectance measurement. A no-flow development value may be a reflectance value of about 85 on a reflectance scale. Such an inadequate flow may trigger a detectable signal to generate a no-result response. Additional examples include deactivating the lateral flow assay system 1, including deactivating reader and/or incubator. In other examples, the flow reference area may include both an intermediate flow reference line 46 with a corresponding theoretical reflectance value and a flow reference line 44.

Similarly, a reflectance value on the assay that is inconsistent with the theoretical reflectance value may also indicate a prior analyte development on the assay. Such a prior analyte development may trigger a detectable signal to generate a no-result response. Further, if the assay is removed prior generating a test result, the system may generate a no-response result.

In some embodiments, assays 21 also include a coding reference component with a corresponding testing sequence for the lateral flow assay system. The coding may be, for example, an alphanumeric coding, a color coding, a bar code, an RFID tag or the like, and may be positioned anywhere along the assay so that decoder sensor can decode the reference code, for example on the assay's surface. For instance, in some examples, the coding reference is positioned along the distal end of assay 21. Depending on the type of coding on the test strip, reader may require an integrated decoding sensor for example, a bar code reader, an RFID decoder or a color sensor.

In certain examples, the testing sequence is at least one temperature adjustment parameter within incubator and/or a channel selection of reader. Further, the reader test parameter may include an associated feature chosen from a standard curve, a dose-response curve and the like. Other embodiments include a variety of testing sequence parameters for the associated diagnostic test being run on the assay.

In some examples, a color matrix, or matrices, reference coding, including a color chosen from red, blue, green and combination thereof, may be associated with a corresponding diagnostic test parameter. When a color coding is used on assay 21, the color can be read by the reader either by a separate optical reading system or the same system that reads the test result. That is, the assay can include a color portion that, after enclosure within the system and test initiation, will be read by the color sensor to determine the reader channel and/or the appropriate incubator temperature. For example, a photodiode with a wide dynamic range of sensitivity to red, green and blue wavelengths can be used as the detector. Red, green and blue LEDs can be used as the light source. Each LED can be turned on sequentially and the detector used to determine the reflectance of each of the colors. A black surface (totally absorbent as containing no color) will produce no reflectance of the given LEDs wavelength and, therefore, the detector will produce low output readings. A white surface will produce maximum reflectance of all three LEDs. Various colors (depending on its content in the surface measured) will produce output from the detector at varying levels.

Such color sensor component may be configured as a separate sensing component within the system, or depending on the sensor used to read the test strip result, a singular component that detects both development on the test strip and color coding. In various examples, assays may be coded with a color that defines the test being run. For example, a red color can indicate a test strip to be used to detect beta-lactam antibiotics. Various matrices can also be delineated by the color system. In the red example, after the system detects the red color on the test strip, reader and/or incubator may be automatically configured for that specific assay 21, for example by temperature adjustment of incubator and selection of appropriate reflectance test parameters within reader. Therefore, in some embodiments, the system may an integral diagnostic test unit that is triggered by specific reference codings on the assay.

In other examples, the coding reference may comprise a radio frequency identification (RFID) tag. Such radio frequency signal transmits a signal from the tag to a decoding RFID sensor module. This signal can be used to start the analytic testing sequence, event, channel, temperature or the like in the reader and/or incubator. Similarly, the reference coding may be a bar code, wherein the bar code is placed on the assay and a bar code reader decodes the reference coding and associated testing sequence information.

In particular examples of the closed testing position, a heating element, incubator, or the like may incubate assay 21 in an incubation environment. For instance, incubator may heat and/or cool assay 21 to provide the proper incubation environment for a corresponding assay and diagnostic test. Typically, incubator is in communication to the cavity and is capable of maintaining a consistent temperature within cavity either by heating or cooling at a pre-defined rate. In some examples, incubator includes insulated base. In other examples, the incubator incubates removable assay module, as described hereinafter. The incubator may be a temperature adjustable incubator. In these examples, the temperature adjustable incubator may include a temperature control. In additional embodiments, the temperature adjustable incubator may allow for localized temperature changes.

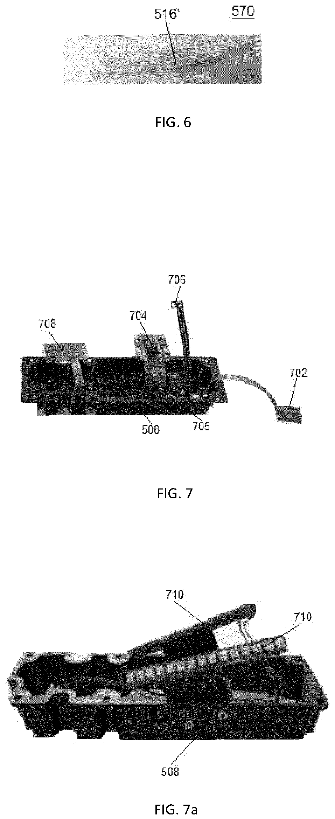

Incubator may include a heater. The heater may be a ceramic heater, a resister heater element and the like. In certain examples, the cavity is designed to be small so that the heater need only draw minimum current. In that way, heating only essential areas and providing insulation around those areas minimizes power requirements. Use of various heating algorithms can be useful. For example, a proportional integrated derivative (PID) can be used. In other examples, incubator may compensate for localized temperature variations from the selected target temperature, for instance a target temperature according a corresponding testing sequence. Incubator may also compensate for localized temperature variations with an analog, proportional control circuit. In other examples, incubator may also compensate for localized temperature variations with a digital control circuit, for instance by utilizing a PID algorithm or a PID controller. Further, those of ordinary skill would recognize that PI, PD, P or I controllers, and/or algorithms, do not preclude any of the embodiments in accordance with the invention herein. For instance, temperature adjustable incubator may include a digitally controlled potentiometer to allow the microprocessor selection of temperature. In other examples, algorithms are particularly useful when test results are affected by small temperature variations. Embodiments include incubator control systems that eliminate the need for manual adjustment by use of embedded, digital temperature sensors and digital potentiometer that provides both accurate temperature reporting and a mechanism by which a micro-controller can adjust a stand-alone, analog, incubator control circuit. In one particular embodiment shown in Figure 7a, an integrated heater 708, for instance with a thermal fuse and temperature sensor, may incubate the assay in any of the incubation environments shown and described herein.

In additional embodiments, cooling might be advantageous to reduce the incubation environment temperature, for example to stabilize the environment of a test medium and/or sample prior to incubation.

In certain examples, test strip 21 may include a first end having a sample absorbing material. Further, the test strip 21 may have a peel strip 50 to introduce sample onto sample absorbing material. Peel strip 50 may include a peel tab at one end of peel strip 50 to facilitate movement of the peel strip 50. Sample absorbing material 50 may be sized and configured to receive about 0.1 to about 1.0 mL of a fluid. Further, sample absorbing material may be composed a dry cellulosic material. Sample absorbing material may be planar or non-planar. Other embodiments include other materials of sample absorbing material.

Typically, assay 21 also includes an opposed second end having a reactor detector material. Assay 21 may support a releasing area having a mobile phase receptor for the at least one analyte. Typically, assay 21 is adapted for selecting the detection of a diagnostic test group chosen from an antibiotic analyte, toxic analyte, analyte class, a combination thereof and the like.

In particular embodiments, the optical detector is aligned in an optical path with the assay and is adapted to acquire an image detection on the assay and is performing a continuous image detection acquisition of the assay. In one particular embodiment shown in Figure 7 a, the housing 508 may support a camera 704, for instance supported on a camera ribbon 705 from the board. Further, any lighting arrangement may enhance imaging of the assay, for instance light bars 710, or the like, shown in Figure 7a. A light level detector 706 may detect internal lighting levels during operation to trigger maintaining consistent lighting about the assay, i.e. feedback and the like, to enhance imaging and/or minimize unwanted shadow development. Unexpectedly, Applicant has discovered the addition of a wall foundation adjacent the imaging device and white reflective material further minimize unwanted shadow development to improve any of the testing shown and described herein.

The sensor may be a single camera, multiple cameras, a single photodiode, multiple photodiodes, a linear photodiode array, a charged couple device, a complementary metal oxide semiconductor and a combination thereof. Therefore, at the same time as incubation and flow, or before, or after incubation and flow is complete, the optical sensors can monitor the assay and compare optical readings, such as reflectance and/or transmission readings, to determine various aspects including sample flow, interference with the optical path such as by debris in the optical path, line development and test result. When the assay and line development falls within preset parameters, the test can continue to completion and provide a final result. Checking of the assay by the optical sensor prior to test completion can provide the user with additional confidence that the test was processed properly.

In particular embodiments, the output may be a voltage, current or a digital output proportional to light intensity as determined by signal conditioning circuitry. Some examples of reader include the TSL12T and TSL13T sensors available from TAOS (Texas Advanced Optolectronic Solutions). The TSL12T and TSL13T sensors are cost-optimized, highly integrated light-to-voltage optical sensors, each combining a photodiode and a transimpedance amplifier (feedback resistor = 80 MΩ and 20 MΩ respectively) on a single monolithic integrated circuit. The photodiode active area is 0.5 mm x 0.5 mm and the sensors respond to light in the range of 320 nm to 1050 nm. Output voltage is linear with light intensity (irradiance) incident on the sensor over a wide dynamic range.

In some examples, the microprocessor may be in communication with the optical detector, and in particular with the sensor. In other examples, the optical detector outputs to other logic means. Further, the microprocessor may be adapted to signal the optical detector to perform continuous image detection of the assay to generate the diagnostic test result. The microprocessor may include, or have associated, memory to store information corresponding to an imaging parameter. The memory may include instructions for monitoring a pre-test analysis on the assay and for generating a diagnostic test result on the assay.

In some embodiments having assays with coding references, as discussed herein, the optical detector may have a decoding ability to decode a reference code on the assay. Thereby, the decoding sensor may thereby active a corresponding diagnostic test in reader. For instance, the decoding sensor may activate a corresponding channel in a multichannel reader and/or activate a corresponding incubation temperature profile within incubator.

The decoding sensor may be a color sensor. For example, the color sensor may be a photodiode with sensitivity to wavelengths chosen from red, blue, green and a combination thereof. In such an example, a color reading an arrangement of photodiodes, each with a specific color filter, is used as the decoding sensor and a white LED (which provides a wide spectrum of light through the three bandwidths (Red, Green and Blue)) is used as the light source. When the LED is turned on, the output from each of the photodiodes is obtained to determine the reflectance of that specific color. The decoding sensor may also be an RFID reader or a bar code reader.

Although reference is often made herein to optical reflectance, and optical reflectance readers, a variety of readers may be usefully employed including, for example, transmittance reader, fluorometers, luminometers, bar code readers, radiation detectors (such as scintillation counters), UV detectors, infrared detectors, electrochemical detectors or optical readers, such as spectrophotometers, charged coupled device (CCD) or complimentary metal oxide semiconductor (CMOS) can be used as an image sensor. An optical reflectance reader can be programmed to analyze the test strip through two-dimensional readings, rather than through the one dimensional, 1x128, readings. For example, a 5x128 or 512 x 492 matrix of "pixels." Such a 2-dimensional reading widens the reflectance capture area to capture reflectance directly from the sides of the test strip.

In other examples, a transmittance reader, such as an ultraviolet Visible Near-Infra red (UV-Vis-NIR) spectroscopy may provide a characterization of the absorption, transmission, and/or reflectivity of the assay. For instance, such an analytical technique may measure the amount of light absorbed on the assay at a given wavelength. Those of ordinary skill in the art would appreciate that a molecule, or part of a molecule, can be excited by absorption. Typically, organic chromophores which absorb strongly in the UV or visible portions of the spectrum nearly always involve multiple bonds, such as C=C, C=O or C=N. This molecular excitation energy may be dissipated as heat, for instance kinetic energy, by the collision of the excited molecule with another molecule, e.g., a solvent molecule, as the molecule returns to the ground state. In other embodiments, the excitation energy may be dissipated by the emission of light in via fluorescence. Regardless of the process, an excited molecule may possess any one of a set of discrete amounts of energy, for instance as described by the laws of quantum mechanics. In examples herein, the major energy levels may be determined primarily by the possible spatial distributions of the electrons, and to a lesser extent by vibrational energy levels, which arise from the various modes of vibration of the molecule.

Therefore, in particular examples herein, absorbance measurements may be determined by the concentration of a solute on the assay. For instance, the progress of such a chemical reaction may be followed using a spectrophotometer in reader to measure the concentration of either a reactant or a product over time. In other examples, a transmission spectroscopy may be used for solid, liquid, and gas sampling. Typically, light is passed through the assay and compared to light that has not. The resulting spectrum may depends on the pathlength or sample thickness, the absorption coefficient of the sample, the reflectivity of the sample, the angle of incidence, the polarization of the incident radiation, and, for particulate matter, on particle size and orientation.

Further, the sensor may monitor flow development along assay 21 to assess whether an inadequate sample volume has been applied to assay 21, or that excess volume has been applied. For instance, prior to determining the test result, the sensor may monitor the flow progress on assay 21 along flow line 44. **In** other examples, the sensor will monitor flow progress at both flow line 44 and along the assay, for instance at intermediary flow line 46. The sensor may be configured to sense whether an adequate flow of a reagent occurred on assay 21, while assay 21 was within the cavity, and/or whether one or more lines, i.e. reflectance or transmission values, were present on assay 21 prior to contact of assay 21 with the sample to be tested.

Particular embodiments include configuring the lateral flow assay system to allow concurrent incubation and reading of assay 21. The combination allows sensors to be used to detect not only test results, but also to check parameters that might indicate whether or not flow has occurred on the assay and that such flow caused a proper test result. That is, while sample, including the potential analyte, or analytes, of interest, is flowing on assay 21 and binding is occurring in a mobile phase and on assay 21, the assay is being incubated. By combining reader and incubator into such an integral diagnostic unit, results can be achieved quicker than when assays, such as test strips or other test medium, are incubated in one device and then moved to a separate device for reading. For instance, speed-to-result can be enhanced, for example to as little as less than about sixty seconds or even less than about thirty seconds. Generally, such a combined system can be dynamic, sensing changes in the assay as they occur by looking for areas of decreased reflectance and/or transmission anywhere on the unused or not-fully developed assay.

A level of protection is provided to prevent pre-run assays from being read (for example, reader will determine if line development, for instance at flow line 44, intermediary flow line 44, test line 40 and/or control line 42 occurred prior to the time when sample flow could have reached such line) and to prevent incorrect readings caused by debris, or similar interference with system optics.

Various triggers may initiate assay analysis of any of the systems and assemblies herein. For example, a test strip package may be inserted into the holder 500 and sample pipetted (or otherwise delivered) into a sample well. The insertion into holder 500 may trip a proximity switch breaking a path of an optical interrupter, for instance to trigger activation of the incubation time or reading shown and described herein. Further, as introduced herein, if the reader does not detect proper flow the reader may trigger aborting the testing sequence, and in particular examples delivering an error message.

If assay 21 is properly detected, any reading sequence shown and described herein may be initiated. For example, optical measurement, such as to detect light reflected off assay 21, can utilize values, such as average reflectance values, in certain areas of assay 21. Initially the system may analyze the assay to determine if the optical path is clear of interference, such as from debris. Debris can be in any number of locations in the optical path including on assay 21 or assay container. Concurrently with analyzing the optical path for debris, or subsequent thereto, the system can analyze the assay to determine if line development has already occurred. That is, whether a proper assay has been inserted into the cavity. For example, test strips configured to develop within certain areas, such as a test line and control line, should have no development in those areas before the analyte and mobile phase have had adequate time to reach them.

In some examples, lines configured to develop a change in reflectance, and/or transmission, when contacted by reagents and sample should not develop until flow of sample and reagents has arrived and binding has occurred. That flow will not have arrived at the time of an initial, for example about three second, read. As such, if line development is detected at the initial assay analysis, then an error message will be delivered to the user and further readings, for example further optical measurements, can be aborted. In this way, this mechanism can detect the use of pre-run (known negative) assay or pre-marked assays. Generally, when reflectance is reduced on an unused assay, either by the presence of line development or other darkening of the assay away from baseline, the reduction in reflectance can inform the user that something has occurred either on the assay or in the optical path, so that the result should not be accepted.

After initial optical readings are found satisfactory and appropriate reader parameters and incubator temperatures are selected, either manually or automatically, further optical readings, for example approximately fifteen seconds after sample has been applied, can be used to determine whether adequate flow has occurred. For example, optical readings can determine whether or not reagents have flowed between a sample application region and a downstream line such as a test line.

The presence of label, such as colored particles, for example gold sol beads, flowing in the mobile phase, and the resulting reflectance changes on the assay between the sample application area and a first test line, can inform the user that flow is occurring and return an error message if no flow is detected. An assay lacking predictable reflectance changes might either have had no sample flow, or inadequate sample flow. Certain measurements can also indicate whether excessive flow has occurred, as in the case where too great a volume of sample has been applied to a test strip and possible reflectance change due to reagents is overwhelmed by the excessive sample volume. Reflectance changes between the sample application area and result detection areas, such as test line and control line, can be temporary and disappear as the mobile phase flows. If optical measurements are taken such temporary/non-permanent changes can be detected.

If an assay, including a test strip or other assay type, has passed the preliminary readings, the system may initiate readings to generate a test result. For example, after approximately thirty seconds test line and control line analysis can begin. When there is enough differentiation, for example percent reflectance difference, between the test and control, a result can be provided. Typically, negative results and more extreme results can be provided sooner and results closer to threshold levels will take longer. For example, in the case of a test in which the reflectance value on the test line relates inversely to the amount of analyte, if the test line reflectance is reduced to a certain level then a negative result can be called. In some examples, if hood 2 is opened while reader is reading the assay, a signal may generate a no-result response.

Reader and/or incubator may be powered by a power source. In some examples for on-site analysis, for instance in rugged environments, the power source may be a vehicle battery. Further, reader footprint is smaller than many traditional systems for enhanced use and communication with an onboard vehicle system, for instance for enhanced and efficient testing during batch pick-up, delivery, and the like.

In certain embodiments, software applications, instrumentation, systems, and assemblies may provide real time data collection of test data, including but not limited to field data, using data communication exchange, including Bluetooth^{®} Interface and the like, adapters and widely utilized phone, and similar personal device, technologies. For instance, one instrument relay embodiment may include generating a test result on any one or more of the testing instrument readers shown and described herein; communicating the test result to a partner device module; and relaying a test result output to an external host module. Further, any of the testing instrument readers herein may interface directly with the external storage configuration. In particular examples, the partner device is a smart phone, however other partner devices may include a tablet, a general purpose computer, a PDA, a digital media player, a digital camera, a wireless information device, and the like.

The partner device may connect to the external storage configuration in a variety of modes. In a remote access mode, the partner device links to an available testing instrument and allows the system to deliver test data to the external storage configuration. The partner device may have an indicator, and when activated providing a pairing signal, and wherein the indicator providing a visual indicia of pairing to the testing instrument reader.

In particular embodiments, a partner device is in a local data communication, such as wireless Bluetooth^{®} transmission/receipt, with one or more testing instrument. Further, the partner device is in host exchange communication, including any mobile telecommunications communication technology such as Wi-Fi (TM), 3G/4G/5G connectivity, with an external host. In certain modules, the testing instrument interfaces with a mobile partner device having a corresponding data communication interface, thereby establishing enabled, i.e. approved, authorized, and/or available, data communication with the testing instrument. In particular examples, the module may include linking an application, for instance a downloadable program application, on the partner device to the testing instrument. Further, the module may include establishing data communication exchange of a result output between the testing instrument and the partner device. Still further, the module may include establishing a secondary messaging data communication, including but not limited to email, text, and the like, secondary message exchange between the testing instrument and the partner device.

Typically, the partner device relays result outputs to an external storage configuration. In particular examples, relaying to the external storage configuration includes transmitting to a remote host website. In other examples, relaying to the external storage includes transmitting to a remote host server. In yet other examples, relaying to the external storage includes transmitting to two or more host providers for data storage and management.

In certain embodiments, the testing instrument interfaces with a mobile partner device having a corresponding data communication interface, thereby establishing enabled, i.e. approved, authorized, and/or available, data communication with the testing instrument. In particular examples, the module may include linking an application, for instance a downloadable program application, on the partner device to the testing instrument. Further, the module may include establishing data communication exchange of a result output between the testing instrument and the partner device. Still further, the module includes establishing a secondary messaging data communication, including but not limited to email, text, and the like, secondary message exchange between the testing instrument and the partner device. The partner device may relay result outputs to an external storage configuration. In particular examples, relaying to the external storage configuration includes transmitting to a remote host website. In other examples, relaying to the external storage includes transmitting to a remote host server. In yet other examples, relaying to the external storage includes transmitting to two or more host providers for data storage and management.

Particular methods for analyte analysis includes incubating the assay, e.g. including any of the embodiments previously shown or described, and reading the assay to generate a test result, e.g. including any of the embodiments previously shown or described. In particular examples, a diagnostic test method for detecting an analyte in a test sample includes adding a test sample to a test medium, such as a lateral flow test strip, to create an assay, the test medium configured to provide a detectable test result after incubation with the test sample; enclosing the test medium within a hood, the hood configured to enclose a cavity, the cavity configured to receive the test medium and connected with a temperature control source, the temperature control source capable of maintaining a consistent temperature; positioning a sensor, such as an optical sensor capable of reading reflectance from the test medium, relative to the test medium so that a change on the test medium is detectable by the sensor; and activating the sensor, such as by closing the hood, the activation causing the sensor to compare the test medium to a preset parameter. When the test medium is not within the preset parameter, a test result is not provided, and wherein when the test medium is within the preset parameter, the test result is determined from the test medium, the test result indicating whether an analyte was detected in the test sample.

In other embodiments of the methods, a preset parameter can be used to determine either or both whether an adequate flow of reagents occurred on the test strip while the test strip was within the cavity and whether one or more test lines are present on the test strip prior to being contacted by the test sample. To do so the sensor can be configured to continuously analyze changes on the test medium until a test result occurs. The test result can be determined by a comparison between changes, such as reflectance changes, in a first line, for example a test line, and a second line, for example a control line, on the test strip.

In particular embodiments, an apparatus to generate a test result from an assay when contacted with a sample includes an incubator adapted to incubate the assay; and an optical detector adapted to detect a first transmission of light result on the assay and adapted to detect at least a subsequent transmission of light result on the assay, and wherein incubation of the assay and detection of the transmissions of light on the assay generates the test result.

In particular embodiments, in an incubated apparatus to generate a test result from an assay when contacted with a sample, a reader includes an optical detector adapted to image a first transmission of light on the assay and adapted to image a plurality of subsequent transmissions of light on the assay, and wherein incubation of the assay and imaging of the transmissions of light on the assay generates the test result.

In particular embodiments, an onboard vehicle system to generate a test result from an antibiotic analyte assay includes an optical detector reader in communication with a vehicle microprocessor assembly to synchronize transmissions of light on an analyte assay, when contacted with a sample, with development of the test result in an onboard vehicle testing environment.

In particular embodiments, an onboard vehicle system to generate an antibiotic test result from an antibiotic analyte assay, the system comprising: an optical detector reader in a test result communication with a vehicle assembly to detect transmissions of light on an antibiotic analyte assay when contacted with a sample to generate the antibiotic test result.

In particular embodiments, an onboard vehicle system to generate an antibiotic test result from an antibiotic analyte assay, the system comprising: an optical detector reader in a test result communication with a vehicle assembly to synchronize progression of an antibiotic test result development with optical detection when contacted with a sample in an onboard vehicle testing environment.

A further example of the methods include using preset parameters to compare the test strip, prior to sample flow thereon, including prior to sample application, with the actual strip being used. For example, a blank strip, prior to reagent flow or prior to sample application, will have a theoretical reflectance profile within a predictable range. If areas of reduced reflectance are detected, that did not result from sample/reagent flow on the strip, then it is possible not only that something untoward has occurred with the test strip but also it is possible that the optical path has become contaminated and requires cleaning. Such contamination can be on the strip or within the reader. Generally, an unused test strip should have no areas of reduced reflectance. Any such areas can indicate a problem, whether from dirt/debris, use of a test strip that was already run, or otherwise. In any case, the test result may not be valid.

Numerous characteristics and advantages have been set forth in the foregoing description, together with details of structure and function. Many of the novel features are pointed out in the appended claims. The disclosure, however, is illustrative only, and changes may be made in detail, especially in matters of shape, size, and arrangement of parts, within the principle of the disclosure, to the full extent indicated by the broad general meaning of the terms in which the general claims are expressed. It is further noted that, as used in this application, the singular forms "a," "an," and "the" include plural referents unless expressly and unequivocally limited to one referent.

## Claims

1. An optics module (500) for an assembly to generate a test result from an assay (21), the optics module comprising:
a. an offset frame (512) adapted to receive said assay and to provide non-planar position of the assay, wherein said offset frame includes an upper tier platform (522) adapted to receive an upper portion of said assay that is angled offset about a lower tier platform (520) adapted to receive a lower portion of said assay in an operating position
b. a base (508) supporting positioning of the offset frame (512) to provide the non-planar positioning; and
c. an optics aperture (511) aligned about said offset frame.

2. The optics module (500) of Claim 1, wherein said assay comprises a proximate portion (530) and wherein said offset frame (512) is adapted to align said proximate portion of said assay external of said assembly in an operating position.

3. The optics module (500) of Claim 1, wherein said upper tier platform (522) is aligned offset about said lower tier platform (520) about a pivot point (516).

4. The optics module (500) of Claim 1, wherein said offset frame (512) is adapted to receive a portion of said assay in a first substantially planar entry position, preferably wherein said offset frame is adapted to align a portion of said assay in a second substantially non-planar testing position.

5. The optics module of Claim 1, wherein the optics aperture (511) of said optics module (500) is adapted to image said assay adjacent a bend about said assay in a testing position.

6. An apparatus to generate a test result from an assay (21) when said assay is contacted with a sample, said apparatus comprising:
a. an optics module (500) according to any of claims 1 to 5;
b. an incubator adapted to incubate said assay; and
c. an optical detector adapted to image said assay in said offset position.

7. The apparatus of Claim 6, wherein said optics module (500) includes an overhang lip (525) adapted to align a proximate portion of said assay protruding about said optics module (500) in an operating position.

8. The apparatus of Claim 6, wherein said optics module (500) includes a substantially planar proximate portion (530) and an opposing substantially non-planar distal portion (532).

9. The apparatus of Claim 8, wherein said proximate portion (530) and said distal portion (532) define either:
a) a non-planar flow path about said assay in a testing position; or
b) an elevated flow path about said assay in a testing position,
or wherein said distal portion is about ten degrees to about thirty degrees offset from said proximate portion, preferably about twenty degrees offset from said proximate portion.

10. The apparatus of Claim 6, wherein said optics module (500) includes a bend aligned between a proximate portion (530) and an opposing distal portion (532) .

11. The apparatus of Claim 6, further comprising an aperture carrier (510) supported within the offset frame (512), wherein said optics module (500) includes an aperture carrier heat block.

12. The apparatus of Claim 6, wherein said optics module (500) includes a proximity switch, preferably wherein said proximity switch is adapted to break a path of an optical interrupter to trigger at least one condition chosen from the group consisting of an incubation, a detection of a transmission of light about said assay, and an imaging on said assay.

13. The apparatus of Claim 6, wherein said apparatus is adapted to perform at least two image detections of said assay.

14. The apparatus of Claim 6, wherein said optical detector is adapted to monitor at least one pre-test parameter after receiving said assay.

## Patentansprüche

1. Optikmodul (500) für eine Baugruppe, um ein Testergebnis aus einem Assay (21) zu erzeugen, wobei das Optikmodul umfasst:
a. einen versetzten Rahmen (512), der angepasst ist, um den Assay aufzunehmen und eine nicht-planare Position des Assays bereitzustellen, wobei der versetzte Rahmen eine Plattform (522) der oberen Lage beinhaltet, die angepasst ist, um einen oberen Abschnitt des Assays aufzunehmen, der um eine Plattform (520) der unteren Lage abgewinkelt versetzt ist, die angepasst ist, um einen unteren Abschnitt des Assays in einer Betriebsposition aufzunehmen
b. eine Basis (508), die die Positionierung des versetzten Rahmens (512) unterstützt, um die nicht-planare Positionierung bereitzustellen; und
c. eine Optikblende (511), die um den versetzten Rahmen herum ausgerichtet ist.

2. Optikmodul (500) nach Anspruch 1, wobei der Assay einen benachbarten Abschnitt (530) umfasst und wobei der versetzte Rahmen (512) angepasst ist, um den benachbarten Abschnitt des Assays außerhalb der Baugruppe in einer Betriebsposition auszurichten.

3. Optikmodul (500) nach Anspruch 1, wobei die Plattform (522) der oberen Lage um einen Drehpunkt (516) versetzt um die Plattform (520) der unteren Lage ausgerichtet ist.

4. Optikmodul (500) nach Anspruch 1, wobei der versetzte Rahmen (512) angepasst ist, um einen Abschnitt des Assays in einer ersten, im Wesentlichen planaren Eintrittsposition aufzunehmen, wobei der versetzte Rahmen vorzugsweise angepasst ist, um einen Abschnitt des Assays in einer zweiten, im Wesentlichen nicht-planaren Testposition auszurichten.

5. Optikmodul nach Anspruch 1, wobei die Optikblende (511) des Optikmoduls (500) angepasst ist, um den Assay neben einer Biegung um den Assay in einer Testposition abzubilden.

6. Einrichtung, um ein Testergebnis aus einem Assay (21) zu erzeugen, wenn der Assay mit einer Probe in Kontakt gebracht wird, wobei die Einrichtung umfasst:
a. ein Optikmodul (500) nach einem der Ansprüche 1 bis 5;
b. einen Inkubator, der angepasst ist, um den Assay zu inkubieren; und
c. einen optischen Detektor, der angepasst ist, um den Assay in der versetzten Position abzubilden.

7. Einrichtung nach Anspruch 6, wobei das Optikmodul (500) eine überhängende Lippe (525) beinhaltet, die angepasst ist, um einen benachbarten Abschnitt des Assays auszurichten, der über das Optikmodul (500) in einer Betriebsposition hervorragt.

8. Einrichtung nach Anspruch 6, wobei das Optikmodul (500) einen im Wesentlichen planaren benachbarten Abschnitt (530) und einen gegenüberliegenden, im Wesentlichen nicht-planaren distalen Abschnitt (532) beinhaltet.

9. Einrichtung nach Anspruch 8, wobei der benachbarte Abschnitt (530) und der distale Abschnitt (532) entweder definieren:
a) einen nicht-planaren Flusspfad um den Assay in einer Testposition; oder
b) einen erhöhten Flusspfad um den Assay in einer Testposition oder wobei der distale Abschnitt um etwa zehn Grad bis etwa dreißig Grad gegenüber dem benachbarten Abschnitt versetzt ist, vorzugsweise um etwa zwanzig Grad gegenüber dem benachbarten Abschnitt versetzt ist.

10. Einrichtung nach Anspruch 6, wobei das Optikmodul (500) eine Biegung beinhaltet, die zwischen einem benachbarten Abschnitt (530) und einem gegenüberliegenden distalen Abschnitt (532) ausgerichtet ist.

11. Einrichtung nach Anspruch 6, ferner umfassend einen Blendenträger (510), der innerhalb des versetzten Rahmens (512) getragen wird, wobei das Optikmodul (500) einen Blendenträgerwärmeblock beinhaltet.

12. Einrichtung nach Anspruch 6, wobei das Optikmodul (500) einen Näherungsschalter beinhaltet, wobei der Näherungsschalter vorzugsweise angepasst ist, um einen Pfad eines optischen Unterbrechers zu unterbrechen, um wenigstens einen Zustand auszulösen, der aus der Gruppe ausgewählt ist, die aus einer Inkubation, einer Erkennung einer Lichtübertragung über den Assay und einer Abbildung auf dem Assay besteht.

13. Einrichtung nach Anspruch 6, wobei die Einrichtung angepasst ist, wenigstens zwei Bilderkennungen des Assays durchzuführen.

14. Einrichtung nach Anspruch 6, wobei der optische Detektor angepasst ist, um wenigstens einen Vortestparameter nach Aufnahme des Assays zu überwachen.

## Revendications

1. Module optique (500) pour un ensemble destiné à générer un résultat d'essai à partir d'un dosage (21), le module optique comprenant :
a. un cadre de décalage (512) adapté pour recevoir ledit dosage et pour fournir une position non plane du dosage, dans lequel ledit cadre de décalage inclut une plate-forme de niveau supérieur (522) adaptée pour recevoir une portion supérieure dudit dosage qui est inclinée de manière décalée par rapport à une plate-forme de niveau inférieur (520) adaptée pour recevoir une portion inférieure dudit dosage dans une position de fonctionnement
b. une base (508) supportant le positionnement du cadre de décalage (512) afin de fournir un positionnement non plan ; et
c. une ouverture optique (511) alignée par rapport audit cadre de décalage.

2. Module optique (500) selon la revendication 1, dans lequel ledit dosage comprend une portion proximale (530)
et dans lequel ledit cadre de décalage (512) est adapté pour aligner ladite portion proximale dudit dosage externe audit ensemble dans une position de fonctionnement.

3. Module optique (500) selon la revendication 1, dans lequel ladite plate-forme de niveau supérieur (522) est alignée de manière décalée par rapport à ladite plate-forme de niveau inférieur (520) autour d'un point de pivotement (516).

4. Module optique (500) selon la revendication 1, dans lequel ledit cadre de décalage (512) est adapté pour recevoir une portion dudit dosage dans une première position d'entrée sensiblement plane, de préférence dans lequel ledit cadre de décalage est adapté pour aligner une portion dudit dosage dans une deuxième position d'essai sensiblement non plane.

5. Module optique selon la revendication 1, dans lequel l'ouverture optique (511) dudit module optique (500) est adaptée pour imager ledit dosage à côté d'une courbure autour dudit dosage dans une position d'essai.

6. Appareil permettant de générer un résultat d'essai à partir d'un dosage (21) lorsque ledit dosage est en contact avec un échantillon, ledit appareil comprenant :
a. un module optique (500) selon l'une quelconque des revendications 1 à 5 ;
b. un incubateur adapté pour incuber ledit dosage ; et
c. un détecteur optique adapté pour imager ledit dosage dans ladite position décalée.

7. Appareil selon la revendication 6, dans lequel ledit module optique (500) inclut une lèvre de débordement (525) adaptée pour aligner une portion proximale dudit dosage faisant saillie autour dudit module optique (500) dans une position de fonctionnement.

8. Appareil selon la revendication 6, dans lequel ledit module optique (500) inclut une portion proximale (530) sensiblement plane et une portion distale (532) sensiblement non plane opposée.

9. Appareil selon la revendication 8, dans lequel ladite portion proximale (530) et ladite portion distale (532) définissent soit :
a) un trajet d'écoulement non plan autour dudit dosage dans une position d'essai ; soit
b) un trajet d'écoulement surélevé autour dudit dosage dans une position d'essai,
ou dans lequel ladite portion distale est décalée d'environ dix degrés à environ trente degrés par rapport à ladite portion proximale, de préférence d'environ vingt degrés par rapport à ladite portion proximale.

10. Appareil selon la revendication 6, dans lequel ledit module optique (500) inclut une courbure alignée entre une portion proximale (530) et une portion distale (532) opposée.

11. Appareil selon la revendication 6, comprenant en outre un élément porteur d'ouverture (510) supporté dans le cadre de décalage (512), dans lequel ledit module optique (500) inclut un bloc thermique d'élément porteur d'ouverture.

12. Appareil selon la revendication 6, dans lequel ledit module optique (500) inclut un commutateur de proximité, de préférence dans lequel ledit commutateur de proximité est adapté pour interrompre le trajet d'un interrupteur optique afin de déclencher au moins une condition choisie dans le groupe constitué d'une incubation, d'une détection de transmission de lumière autour dudit dosage, et d'une imagerie sur ledit dosage.

13. Appareil selon la revendication 6, dans lequel ledit appareil est adapté pour effectuer au moins deux détections d'image dudit dosage.

14. Appareil selon la revendication 6, dans lequel ledit détecteur optique est adapté pour surveiller au moins un paramètre pré-essai après réception dudit dosage.
